# EUROPEAN PATENT APPLICATION

(11) **EP 1 503 320 A1**
(43) Date of publication of application: **02.02.2005**
(21) Application number: 04254594.7
(22) Date of filing: 30.07.2004
(51) Int. Cl.: G06F 17/60

(54) **Distribution management system**

(30) Priority: 30.07.2003 JP 2003282645
(71) Applicant: Matsushita Electric Industrial Co., Ltd., Kadoma-shi, Osaka-fu 571-8501 (JP)
(72) Inventor: Yamamoto, Masashi, Kadoma-shi, Osaka 571-0038 (JP)
(74) Representative: Crawford, Andrew Birkby

(57) **Abstract**

A distribution management system includes an output terminal and a distribution management apparatus that manages distribution of items routed through distribution points in a predetermined order and transported to destinations, and determines, for each item delivery request, from which distribution point, items in stock should be allocated. The apparatus stores stock information indicating a quantity of currently and/or prospectively allocatable items, receives a delivery request, including a delivery time limit, to have specified items delivered, and judges whether an immediate delivery is indicated. The apparatus selects, (i) if judged in the affirmative, the last distribution point before the destination as an allocation point when it has allocatable articles in stock, and (ii) if judged in the negative, selects a distribution point other than the last distribution point as the allocation point when it has allocatable articles in stock, and transmits information indicating the allocation point to the output terminal.

## Description

### BACKGROUND OF THE INVENTION

### Field of the Invention

The present invention relates to a distribution management system in which a plurality of computers being connected via a network are used, particularly to techniques for stock allocation to determine from which distribution point the items in stock should be allocated for a delivery request.

### Description of the Related Art

Generally speaking, mass-produced articles of goods are transported to a store after being routed through a plurality of distribution points, in order to reduce distribution costs by, for example, sharing the transportation routes for different destinations. In other words, the articles of goods are transported from a near-origin distribution point, via intermediary distribution points, to the destination distribution points, which are stores.

For example, some articles of goods are manufactured at a manufacturing factory and stored in the storage of the manufacturing factory, until they are carried out later at a certain point of time so as to be transported to one of the core distribution centers, each of which is provided in an area of relatively large predetermined size, and stored in the storage of the core distribution center. Later at a certain point of time, the articles of goods are carried out of the storage of the core distribution center so as to be transported to one of the satellite distribution centers, each of which is provided in an area of relatively small predetermined size within the corresponding relatively large-sized area of the core distribution center, and stored in the storage of the satellite distribution center. Later at a certain point of time, the articles of goods are again carried out of the storage of the satellite distribution center so as to be transported to one of the stores, each of which is provided in an area of relatively small predetermined size corresponding to the satellite distribution center and placed in a yard of the store used for storing the articles of goods.

More specifically, the articles of goods (hereafter, simply referred to as "articles") are transported, as necessary, from the manufacturing factory to each of a plurality of core distribution centers on regularly-scheduled transportation services, for example, one service a day. The articles are then transported, as necessary, from the core distribution centers to each of a plurality of satellite distribution centers that are provided in areas corresponding to the core distribution centers, on regularly-scheduled transportation services, for example, one service a day. Subsequently, the articles are transported, as necessary, from the satellite distribution centers to each of a plurality of stores that are provided in areas corresponding to the satellite distribution centers, on regularly-scheduled transportation services, for example, two services a day. If one observes this system from the viewpoint a store, the distribution route is fixed because the articles are delivered from the storage of the manufacturing factory to the store, after being routed through a core distribution center that is located close to the store and a satellite distribution center that is located closest to the store. It should be noted that, as a general trend, the manufacturing factory and near-origin distribution points are located in a suburban area with low land prices and they each have a relatively large-sized storage, whereas near-destination distribution points and many of the stores are located in the urban areas and they each have a relatively small-sized storage or a yard for storing articles, in view of the populations of consumers, the storage maintenance costs, and the volumes of traffic that are different between the urban areas and the suburban areas.

As an example of distribution management system to manage distribution of articles as statedabove, the Japanese Unexamined Patent Application Publication No. 9-136704 discloses a distribution management system.

In order to realize efficient distribution, the conventional distribution management system includes a computer for managing, for each distribution point, quantity of articles in stock and schedules to carry the articles out of the storage and determining the points of time at which the articles are transported between the distribution points. When having received a delivery request for having articles delivered to a store, the computer performs stock allocation processing by allocating the articles in stock at a satellite distribution center located closest to the store, when the satellite distribution center has the articles in stock, and allocating the articles in stock at a core distribution center located nearby as long as the core distribution center has the articles in stock. In addition, a terminal device is provided at each of the distribution points. The staff at each distribution point is able to view and update, whenever necessary, using the terminal device, the data that is related to the quantity of articles in stock and the like and is managed by the distribution management system.

Here, "to allocate articles in stock at a distribution point in response to a delivery request to have the articles delivered to a store" means to determine, in response to a delivery request, some or all of the articles in stock at a distribution point as the articles to be transported to the store. More specifically, when articles in stock at a certain distribution point have been allocated in response to a delivery request, out of the articles that are in stock at the distribution point and managed by the distribution management system, as many of the articles as indicated in the delivery request are managed with a schedule of being carried out. In association with the management of the articles in stock with the carry-out schedule, the staff at the distribution point understands the situation via the terminal device, carries out the specified articles from the storage when it is the scheduled time, loads the articles onto a transportation means such as a truck, and updates the data for the quantity of articles in stock at the distribution point in correspondence with the carrying out of the articles.

At a store, according to a purchase request received from a consumer or according to analysis of tendency regarding the sales volume of the articles, a delivery of as many articles as required is requested to the distribution management system along with specification of the type, the quantity, and the delivery schedule of the articles. The details of the request are inputted, via a terminal device, into a computer that constitutes the distribution management system by the staff working in the distribution management system, the store, or the like, as a delivery request for having the articles delivered to the store.

In a conventional distribution management system like this, when a delivery request for having articles immediately delivered to a store is made, as long as the satellite distribution center located closest to the store has the articles in stock, those articles are allocated in response to the delivery request according to the conventional stock allocation processing. As a result, the articles in stock at the satellite distribution center located closest to the store are loaded by the staff onto a transportation means such as a truck, and transported directly to the store. Thus, it is possible to promptly respond to the delivery request for an immediate delivery.

On the contrary, when a delivery request for having articles immediately delivered to a store is made, and the satellite distribution center located closest to the store does not have the articles in stock, the conventional distribution management system is not able to respond to the immediate delivery request very promptly. In other words, in such a case, the articles in stock at either a core distribution center located near the store or the manufacturing factory are allocated in response to the delivery request according to the conventional stock allocation processing. Asaresult, such articles in stock are loaded onto a transportation means and transported, by a regularly-scheduled transportation service which runs, for example, once a day, to the satellite distribution center where transshipment is performed normally, and then transported from the satellite distribution center to the store by a regularly-scheduled transportation service that runs, for example, twice a day. Thus, it takes more time for the articles to arrive at the store than in the case where the satellite distribution center located closest to the store has the articles in stock. As additional information, it may be possible to solve the problem of taking a long time to meet immediate delivery requests, by arranging it so that the satellite distribution centers each keep a large quantity of articles in stock. This solution, however, requires that each satellite distribution center has a storage space larger than in the conventional case and therefore makes the storage management costs higher. Thus, this solution is considered not very appropriate.

### SUMMARY OF THE INVENTION

In view of the aforementioned problem, an object of the present invention is to provide a distribution management system or a distribution management apparatus to be a constituent element of a distribution management system that performs stock allocation processing, in a case where items such as articles of goods, products, and the like are routed through a plurality of distribution points in order to be transported to a destination such as a store, a product supplying point, and the like, so as to enhance the capability of responding to a delivery request to have the items immediately delivered to the destination, without particularly increasing the quantity of items in stock at each of the distribution points located relatively closer to the destination.

In order to achieve the aforementioned object, the present invention provides a distribution management apparatus that manages distribution of items to be routed through a plurality of distribution points in a predetermined order so as to be transported to destinations and determines, for each of delivery requests to have the items delivered to the destinations, from which one of the distribution points items in stock should be allocated, the distribution management apparatus comprising: a stock information storing unit that stores therein stock information indicating, for each of the distribution points, a quantity of items that are currently and prospectively located at the distribution point and are allocatable for delivery requests; a receiving unit operable to receive a delivery request for having specified items delivered to a destination, the delivery request including delivery schedule information related to a delivery time limit; a judging unit operable to judge whether or not the delivery schedule information indicates an immediate delivery; and a selecting unit operable to (i) in a case where the delivery schedule information indicates an immediate delivery, check the stock information of a first distribution point which is a last distribution point en route to the destination, judge whether or not the requested items are allocatable from the first distribution point, and select, when having judged in the affirmative, the first distribution point as an allocation point from which the items in stock are allocated to meet the delivery request, and (ii) in a case where the delivery schedule information does not indicate an immediate delivery, check the stock information of a second distribution point which is other than the first distribution point and is en route to the destination, judge whether or not the requested items are allocatable from the second distribution point, and select, when having judged in the affirmative, the second distribution point as the allocation point from which the items in stock are allocated to meet the delivery request.

Here, "to allocate items in stock at a distribution point for a delivery request to have the items delivered to a destination" means to determine, in response to a delivery request, some or all of the items in stock at a distribution point as the items to be transported to the destination. An "allocation point" is a distribution point at which the items in stock to be allocated for a delivery request are located. It should be noted that the information indicating the selected allocation point is used as it is, for example, stored into a recording medium or the like provided inside or outside of the distribution management apparatus so as to be accessible from other apparatuses, or transmitted to other apparatuses.

With the arrangement above, in the case where the delivery request is not an immediate delivery request, the items to be allocated are not the items in stock at a distribution point located closest to the destination on the transportation route. Thus, the quantity of the items in stock at the closest distribution point does not get reduced at all. Accordingly, even if non-immediate delivery requests are repeatedly made before an immediate delivery request is made, it is possible to allocate the items in stock at the closest distribution point for the immediate delivery request, as long as the closest distribution point has the items in stock. It should be noted that on a premise that there are operational rules that loading of the items onto transportation means and transporting of the items should be performed according to the results of the allocation, it is possible to transport the items for a delivery request from the distribution point located closest to the destination on the transportation route, according to the selection of the allocation point by the distribution management apparatus. Thus, it is possible to transport the items more promptly than in the case where the items are transported from a distribution point located distant from the destination on the transportation route. Consequently, it is possible to avoid, to some extent, having situations in which it is impossible to meet a delivery time limit and respond to a delivery request.

For example, suppose that distribution is managed so that, in order for the distribution point located closest to the destination to keep in stock as many items as expected to be sold in two days, the closest distribution point has items supplied from a distribution point located farther away from the destination when the quantity of the items in stock at the closest distribution point has become short or expected to be low. In such a case, if a large number of delivery requests of which the delivery time limits are within ten days are made, and the items in stock at the closest distribution point are allocated and transported, the quantity of allocatable items at the closest distribution point will be low. Then, if some other delivery requests of which the delivery time limits are within one day are made subsequently, there will be a situation where it is impossible to allocate the items in stock at the closest distribution point due to the quantity in stock being low. It will therefore be necessary to allocate items in stock at some other distribution points. There is also a possibility that it is impossible to meet the delivery time limit of one day when items in stock at a distribution point located distant from the destination are allocated and transported in response to the delivery request of which the delivery time limit is within one day, in the case where the transportation routes between distribution points are fixed in order to transport items efficiently, in consideration of transshipment of items on and off transportation means such as trucks to be performed at distribution points through which the items are to be routed. In contrast to such a situation, according to the distribution management apparatus of the present invention, when a delivery request of which the delivery time limit is within ten days has been made, the items in stock at a distribution point other than the closest distribution point are allocated. Therefore, even if more delivery requests of which the delivery time limits are within one day are made, it is possible to respond to the delivery requests by allocating the items in stock at the closest distribution point.

It is acceptable to have an arrangement wherein the distribution management apparatus further comprises an outputting unit operable to output information specifying the allocation point, to outside of the distribution management apparatus.

With this arrangement, it is easy to utilize the information indicating the selected allocation point from the outside of the distribution management apparatus. As an example of the output, in the case where the information indicating the allocation point is transmitted to the outside, utilization of the information is easily achieved when the information is received at a personal computer or the like provided on the outside and displayed on a display device.

It is further acceptable to have an arrangement wherein the distribution management apparatus further comprises a stock information updating unit operable to, (i) when the first distribution point has been selected as the allocation point, update the stock information of the first distribution point by reducing the quantity of the items indicated as being allocatable from the first distribution point, and (ii) when the second distribution point has been selected as the allocation point, update the stock information of the second distribution point by reducing the quantity of the items indicated as being allocatable from the second distribution point.

With this arrangement, the stock information always reflects the most current situation.

It is acceptable to have an arrangement wherein the distribution management apparatus further comprises a route information storing unit that stores therein route information indicating the predetermined order in which the items are to be routed through the plurality of distribution points, wherein the selecting unit refers to the route information in order to specify the first distribution point of which the checking of the stock information is performed.

With this arrangement, even if a situation arises in which the transportation route needs to be altered, it is possible to realize distribution system that is able to respond to delivery requests promptly in an appropriate manner by merely updating the route information stored.

It is acceptable to have an arrangement wherein the selecting unit refers to the route information and specifies a second-last distribution point en route to the destination as the second distribution point of which the checking of the stock information is performed.

With this arrangement, in the case where a delivery request is a non-immediate delivery request, the judgment of whether there are allocatable items in stock to meet the delivery request is made with a first candidate being a distribution point that is located second-closest to the destination on the transportation route, while the distribution point located closest to the destination, which is a first candidate for an immediate delivery request, is excluded from the judgment. Thus, when a delivery request is a non-immediate delivery request but has a fixed delivery time limit, it is possible to avoid, to some extent, having situations in which it is impossible to meet the delivery time limit and respond to the delivery request.

It is further acceptable to have an arrangement wherein the selecting unit is further operable to, in the case where the delivery schedule information indicates an immediate delivery and the requested items are judged to be unallocatable from the first distribution point, check the stock information of each distribution point one by one, farther and farther away from the destination than the first distribution point is according to the route information, in order to judge whether or not the requested items are allocatable to meet the delivery request, until a distribution point from which the requested items are allocatable is found or there is no more distribution point to check for the stock information thereof and select, when such a distribution is found, the distribution point from which the requested items are allocatable as the allocation point, and in the case where the delivery schedule information does not indicate an immediate delivery and the requested items are judged to be unallocatable from the second distribution point, check the stock information of each distribution point one by one, farther and farther away from the destination than the second distribution point is according to the route information, in order to judge whether or not the requested items are allocatable to meet the delivery request, until a distribution point from which the requested items are allocatable is found or there is no more distribution point to check for the stock information thereof and select, when such a distribution point is found, the distribution point from which the requested items are allocatable as the allocation point.

With this arrangement, even in the case where a distribution point located relatively closer to the destination on the transportation route does not have allocatable items in stock to meet the delivery request, it is possible to respond to the delivery request if a distribution point located relatively farther from the destination has allocatable items in stock.

It is possible to have an arrangement wherein the delivery schedule information indicates how much time is left before the delivery time limit, and the judging unit makes the judgment of whether a delivery is an immediate delivery or not by comparing the time left indicated in the delivery schedule information with a predetermined length of time.

With this arrangement, the requester who makes a delivery request is able to specify by when the items should actually be delivered in response to a delivery request, for example, within five days of the current date or by what date, in order to request that the delivery should be made within a certain period of time. Further, the distribution management system is able to judge whether an delivery request is an immediate delivery or a non-immediate delivery, which forms the basis of the judgment of whether the allocation point should be the closest distribution point or not, by comparing the specified period of time with a predetermined period of time. Thus, by adjusting the predetermined period of time, it is possible to easily reflect the distribution plan of the items onto actuality, in consideration of how many days' worth of requests, items should be kept in stock for, at the closest distribution point.

It is acceptable to have an arrangement wherein the delivery schedule information is a flag indicating one of an immediate delivery and a non-immediate delivery, and the judging unit makes the judgment of whether a delivery is an immediate delivery or not according to the flag.

With this arrangement, the distribution management apparatus is able to easily judge whether a delivery request is an immediate delivery request or non-immediate delivery request.

It is further acceptable to have an arrangement wherein the delivery request includes requested quantity information indicating a quantity of the items requested to be delivered, and when the selecting unit makes the judgment of whether or not the requested items are allocatable from any of the distribution points, if one of the distribution points has allocatable items equal to or larger than the quantity of the items indicated in the requested quantity information, the selecting unit judges in the affirmative and selects the distribution point as the allocation point, and the stock information updating unit updates the stock information of the allocation point by reducing the quantity of the items indicated as being allocatable from the allocation point by the quantity indicated in the requested quantity information.

Here, the quantity is the quantity of the items to be delivered, and the number of pieces of items is conceptually included.

With this arrangement, the requester who makes a delivery request is able to request that some items should be delivered, while specifying the quantity of the items. As a result, the distribution management apparatus selects, as the allocation point, a distribution point that has as many items in stock. It may therefore be possible to enhance operational efficiency related to distribution, in comparison with the case where a plurality of distribution points that each do not have enough items in stock to satisfy the specified quantity are selected as the allocation points.

It is also acceptable to have an arrangement wherein the stock information includes, for each of the distribution points, (i) current stock information that indicates a quantity of the items currently in stock at the distribution point, (ii) arrival prospect information that indicates a quantity of the items expected to arrive on a current date and each of a predetermined number of following dates, and (iii) allocated item information that indicates a quantity of the items that are allocated for deliveries on the current date and each of a predetermined number of following dates, the selecting unit refers to the current stock information, the arrival prospect information, and the allocated item information and when a distribution point has, on any of the current and the following dates, allocatable items equal to or larger than the quantity indicated in the requested quantity information, the allocatable items being calculated by subtracting the quantity of the items indicated in the allocated item information from a total quantity of the items located at the distribution point on each day, the selecting unit judges that the requested items are allocatable from the distribution point and selects the distribution point as the allocation point, the selecting unit further selects one of the current and the following dates on which the allocation point has sufficient allocatable items as an allocation date, and the stock information updating unit updates the stock information of the allocation point by increasing the quantity of the items having been allocated for the selected allocation date, which is indicated in the allocated item information, by the quantity of the items indicated in the requested quantity information.

With this arrangement, the distribution management apparatus is able to manage the items in stock with the prospective schedule at each distribution point being taken into consideration, and to select the allocation dates. In principle, the staff is therefore able to meet delivery requests by merely following the selection results and promptly starting the action of transporting the items indicated in the delivery requests on and after the allocation dates.

Further, it is acceptable to have an arrangement wherein the delivery request includes an item identifier for identifying the items to be delivered out of various kinds of items, the stock information indicates the quantity of the items in correspondence with the item identifier, and when the stock information indicates that a distribution point has allocatable items identified with the item identifier indicated in the delivery request, the selecting unit judges that the requested items are allocatable from the distribution point.

With this arrangement, it is possible to have operational distribution of different kinds of items that is able to promptly respond to immediate delivery request.

It is also acceptable to have an arrangement wherein the distribution management apparatus further comprises an immediate delivery criteria information storing unit that stores therein immediate delivery criterion information in which, for each of the various kinds of items, an item identifier is shown in correspondence with an immediate delivery criterion period with which judgment of whether a delivery is an immediate delivery or not is made, wherein the delivery schedule information indicates how much time is left before the delivery time limit, and the judging unit makes the judgment of whether a delivery is an immediate delivery or not by comparing the immediate delivery criterion period corresponding to the item identifier indicated in the delivery request with the time left indicated in the delivery schedule information.

With this arrangement, it is possible to change the criterion used to judge whether a delivery request is an immediate delivery request or not according to characteristics of articles. The characteristics of articles are, for example, that some articles are projected to sell well and some articles keep selling by certain quantity for a long period of time. Thus, it is possible to adjust the quantity of articles in stock at the closest distribution point according to the characteristics of the articles.

The present invention further provides a distribution management system including (i) a distribution management apparatus that manages distribution of items to be routed through a plurality of distribution points in a predetermined order so as to be transported to destinations and determines, for each of delivery requests to have the items delivered to the destinations, from which one of the distribution points items in stock should be allocated and (ii) an output terminal, wherein the distribution management apparatus comprises: a stock information storing unit that stores therein stock information indicating, for each of the distribution points, a quantity of items that are currently and prospectively located at the distribution point and are allocatable for delivery requests; a receiving unit operable to receive a delivery request for having specified items delivered to a destination, the delivery request including delivery schedule information related to a delivery time limit; a judging unit operable to judge whether or not the delivery schedule information indicates an immediate delivery; a selecting unit operable to (i) in a case where the delivery schedule information indicates an immediate delivery, check the stock information of a first distribution point which is a last distribution point en route to the destination, judge whether or not the requested items are allocatable from the first distribution point, and select, when having judged in the affirmative, the first distribution point as an allocation point from which the items in stock are allocated to meet the delivery request, and (ii) in a case where the delivery schedule information does not indicate an immediate delivery, check the stock information of a second distribution point which is other than the first distribution point and is en route to the destination, judge whether or not the requested items are allocatable from the second distribution point, and select, when having judged in the affirmative, the second distribution point as the allocation point fromwhich the items in stock are allocated to meet the delivery request; and a transmitting unit operable to transmit allocation point information indicating the allocation point to the output terminal, and the output terminal comprises: an acquiring unit operable to acquire the allocation point information; and a displaying unit operable to display the acquired allocation point information.

With this arrangement, in the case where the delivery request is not an immediate delivery request, the items to be allocated by the distribution management apparatus are not the items in stock at a distribution point located closest to the destination on the transportation route. Thus, the quantity of the items in stock at the closest distribution point does not get reduced at all. Accordingly, even if non-immediate delivery requests are repeatedly made before an immediate delivery request is made, it is possible to allocate the items in stock at the closest distribution point for the immediate delivery request, as long as the closest distribution point has the items in stock. The result of the allocation is transmitted to an output terminal and displayed on the output terminal. As the staff refers to the output terminal display and performs the loading of the items onto a transportation means and the transporting of the items, the items for a delivery request are transported from the distribution point located closest to the destination on the transportation route. Thus, it is possible to transport the items more promptly than in the case where the items are transported from a distribution point located distant from the destination on the transportation route. Consequently, it is possible to avoid, to some extent, having situations in which it is impossible to meet a delivery time limit and respond to a delivery request.

Further, it is acceptable to have an arrangement wherein the output terminal is located at one of the distribution points.

With this arrangement, the staff at each distribution point is able to easily view the output terminal and promptly perform the actions of the loading, the transporting, and the like of the items in response to delivery requests.

It is acceptable to have an arrangement wherein each of the output terminals further comprises a printing unit operable to print the allocation point information acquired by the acquiring unit.

With this arrangement, the staff who performs the actions of the transporting and the like of the items is able to execute the actions accurately with the printed information at hand.

Further, it is acceptable to have an arrangement wherein the distribution management system further comprises a request terminal operable to generate, based on an input operation, request information that indicates the delivery request and transmit the request information to the distribution management apparatus, wherein the receiving unit receives the delivery request by receiving the request information.

With this arrangement, by operating the request terminal, it is possible to have the delivery requests transferred to the distribution management apparatus via telecommunication. Thus, when the request terminal is provided at each store and the like, the staff at the store is able to easily make delivery requests without going to the location at which the distribution management apparatus is provided.

The present invention further provides a distribution management method for managing distribution of items to be routed through a plurality of distribution points in a predetermined order so as to be transported to destinations and determining, for each of delivery request to have the items delivered to the destinations, from which one of the distribution points items in stock should be allocated, the distribution management method comprising: a stock information storing step of storing, into a recording medium, stock information indicating, for each of the distribution points, a quantity of items that are currently and prospectively located at the distribution point and are allocatable for delivery requests; a receiving step of receiving a delivery request for having specified items delivered to a destination, the delivery request including delivery schedule information related to a delivery time limit; a judging step of judging whether or not the delivery schedule information indicates an immediate delivery; and a selecting step of (i) in a case where the delivery schedule information indicates an immediate delivery, checking the stock information of a first distribution point which is a last distribution point en route to the destination, judging whether or not the requested items are allocatable from the first distributionpoint, and selecting, when having judged in the affirmative, the first distribution point as an allocation point from which the items in stock are allocated to meet the delivery request, and (ii) in a case where the delivery schedule information does not indicate an immediate delivery, checking the stock information of a seconddistribution point which is other than the first distribution point and is en route to the destination, judging whether or not the requested items are allocatable from the second distribution point, and selecting, when having judged in the affirmative, the second distribution point as the allocation point from which the items in stock are allocated to meet the delivery request.

With this arrangement, in the case where the delivery request is not an immediate delivery request, the items to be allocated by the distribution management apparatus are not the items in stock at a distribution point located closest to the destination on the transportation route. Thus, the quantity of the items in stock at the closest distribution point does not get reduced at all. Accordingly, without particularly having to keep a large quantity of items in stock at the closest distribution point specifically in anticipation of immediate delivery requests, there is a higher possibility of being able to respond to an immediate delivery request with the items in stock at the distribution point located closest to the destination.

It is acceptable to have an arrangement wherein the distribution method further comprises: a loading step of loading the items that are indicated in the delivery request and allocated from the selected allocation point onto a transportation means; and a transporting step of transporting the loaded items to the destination following a transportation route in the predetermined order as well as performing transshipment of items at every distribution point en route to the destination.

With this arrangement, it is possible to transport the items indicated in the delivery request from the distribution point selected as the allocation point in an appropriate manner. It should be noted that, in the case where the staff performs the transshipment every time the items indicated in the delivery request go through each of the distribution points en route, when a large number of delivery requests are made, some of the delivery requests are handled by transporting the items in stock from the closest distribution point and other delivery requests are handled by transporting such items in stock from farther distribution points that are routed through the closest distribution point before they get to the destination. Accordingly, it is possible to transport, between the closest distribution point and the destination, the items that have come from different distribution points altogether on a single transportationmeans. Thus, it is possible to achieve the effect of reducing the transportation costs.

### BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:
FIG. 1 shows an example of transportation routes for articles from a manufacturing factory to stcres;
FIG. 2 shows a computer network that constitutes the distribution management system;
FIG. 3 shows the relationship among a manufacturing factory, a core distribution center, a satellite distribution center, and a store, all of which are located on one transportation route;
FIG. 4 is a functional diagram of a distribution management system;
FIG. 5 shows the configuration and an example of what is indicated in a piece of delivery request information;
FIG. 6 shows the configuration and an example of what is indicated in immediate delivery criteria information;
FIG. 7 shows the configuration and an example of what is indicated in route information;
FIG. 8 shows the information stored in the stockmanagement information storing unit within the distribution management apparatus;
FIG. 9 shows the configuration and an example of what is indicated in a piece of site-specific stock management information that corresponds to a satellite distribution center;
FIG. 10 shows an example of what is indicated a piece of site-specific stock management information that corresponds to a core distribution center;
FIG. 11 shows an example of what is indicated in a piece of site-specific stock management information after the piece of information shown in FIG. 10 is updated;
FIG. 12 shows the configuration and an example of what is indicated in a piece of delivery information;
FIG. 13 is a flow chart that shows the delivery request processing performed by a request terminal;
FIG. 14 shows an example of a screen on which an article code and the like can be inputted on a request terminal;
FIG. 15 is a flow chart that shows the allocation processing performed by the distribution management apparatus;
FIG. 16 shows an example of what is indicated in a piece of delivery request information;
FIG. 17 shows an example of what is indicated in a piece of site-specific stock management information after the piece of information shown in FIG. 9 is updated; and
FIG. 18 shows an example of what is indicated in a piece of delivery information.

### DESCRIPTION OF THE PREFERRED EMBODIMENTS

The followingdescribes a distribution managementsystem according to an embodiment of the present invention, with reference to the drawings.

### 1. GENERAL OUTLINE OF DISTRIBUTION

First, explanation is provided on distribution of articles that are managed in the distribution management system.

The distribution management system manages stock at each distribution point and shipping schedules for delivery requests with regard to articles that are manufactured in a manufacturing factory and transported to stores after being routed through distribution points.

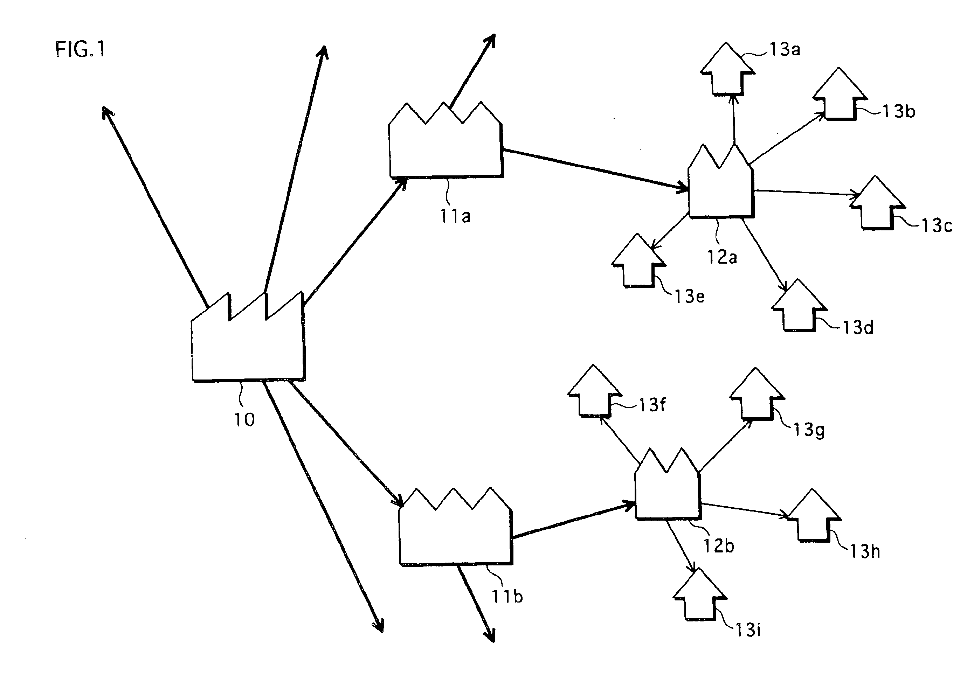

FIG. 1 shows an example of transportation routes of articles from a manufacturing factory to stores.

The articles are manufactured in a manufacturing factory 10 in a suburban area and stored in a relatively large-sized storage of the manufacturing factory 10. Then, the articles are divided and transported from the manufacturing factory 10 to a plurality of core distribution centers.

The plurality of core distribution centers including the core distribution centers 11a and 11b are provided so that there is one core distribution center in every relatively large-sized area. Each core distribution center has a relatively large-sized storage. The articles transported from the manufacturing factory 10 to a core distribution center are divided and transported to a plurality of satellite distribution centers.

The plurality of satellite distribution centers including the satellite distribution centers 12a and 12b are provided so that there is one satellite distribution center in every relativelysmall-sized area. Each satellite distribution center has a relatively small-sized storage. The articles transported from a core satellite distribution center to a satellite distribution center are subsequently transported, in response to a delivery request from a store, to the store that has made the request.

A plurality of stores including the stores 13a through 13i are provided so that there are relatively more stores in urban areas where more consumers are located than in suburban areas. In FIG. 1, the stores 13a through 13e each receive the articles transported via the core distribution center 11a and the satellite distribution center 12a. The stores 13f through 13i each receive the articles transported via the core distribution center 11b and the satellite distribution center 12b.

From the viewpoint of a store, there is only one fixed distribution route on which articles are transported. Any one of the stores receives articles that are carried out of the storage of the manufacturing factory 10 and transported via one of the core distribution centers and one of the satellite distribution centers in the stated order.

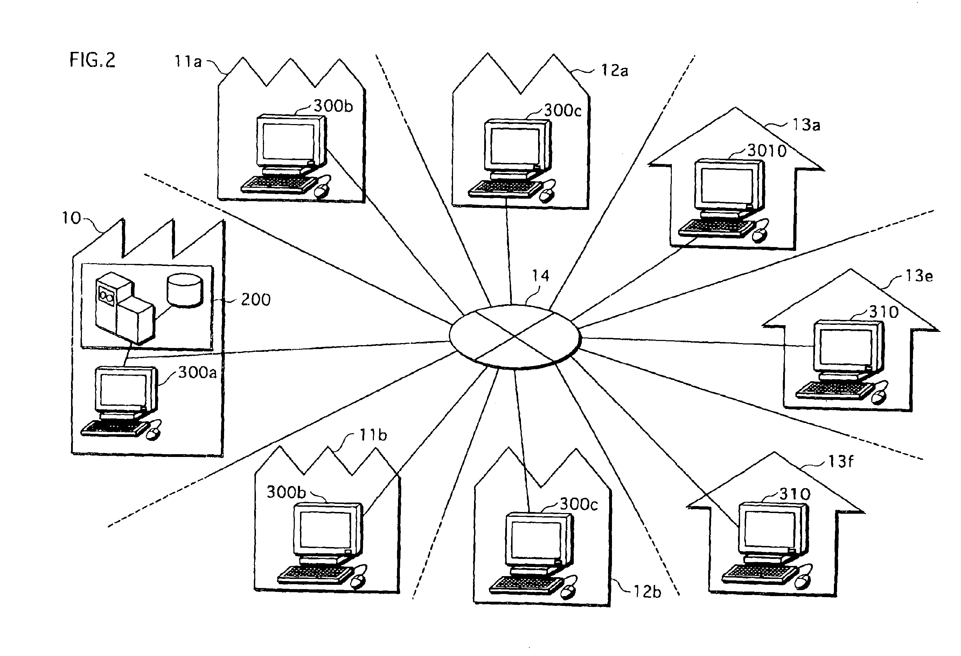

FIG. 2 shows a computer network that constitutes the distribution system.

As shown in the drawing, the computer network that constitutes the distribution management system 100 is structured so that the distribution management apparatus 200 and the stock management terminal 300a provided at the manufacturing factory 10, and the stock management terminals 300b provided in the core distribution centers 11a, 11b, and so on, and the stock management terminals 300c provided at the satellite distribution centers 12a, 12b, and so on, and the request terminals 310 provided at the stores 13a, 13e, and so on are connected with one another via the network 14.

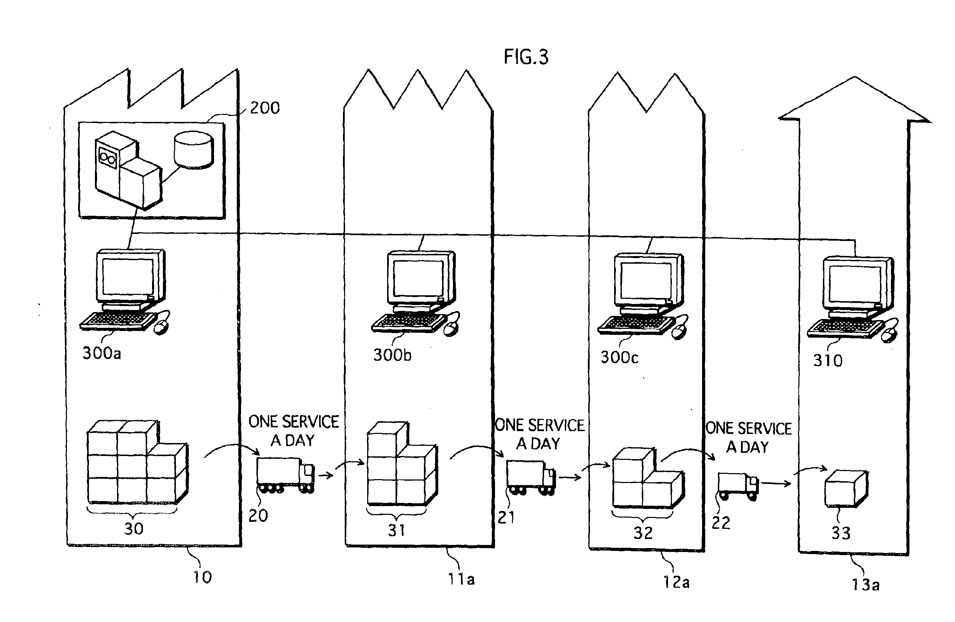

FIG. 3 shows the relationship among the manufacturing factory, the core distribution center, the satellite distribution center, and the store, all of which are located on one transportation route.

Some of the articles 30 that have been manufactured in the manufacturing factory 10 and stored in the storage of the manufacturing factory 10 are transported to the core distribution center 11a on a large-sized truck 20 that runs a once-a-day service. The articles 31 that have been carried into the core distribution center 11a are stored into the storage of the core distribution center 11a or placed in a yard temporarily for transshipment onto a middle-sized truck 21. Then, some of the articles are loaded onto the middle-sized truck 21 from the storage or the yard and transported to the satellite distribution center 12a on the middle-sized truck 21 that runs a once-a-day service. Here, it should be noted that, in principle, the articles that have arrived at the core distribution center 11a are transported to the satellite distribution center 12a on the next day at the earliest.

The articles 32 that have been carried into the satellite distribution center 12a are stored into the storage of the satellite distribution center 12a or placed in a yard temporarily for transshipment onto a small-sized truck 22. Then, some of the articles are loaded onto the small-sized truck 22 and transported to the store 13a that has made a delivery request on the small-sized truck 22 that runs a once-a-day service. Here, it should be noted that, in principle, the articles that have arrived at the satellite distribution center 12a are transported to the store 13a on the next day at the earliest.

The articles 33 that have been carried into the store 13a are to be sold to consumers sometime.

When one views the distribution management system 100 in which a plurality of computers are connected with one another via a network, the manufacturing factory 10 has a distribution management apparatus 200 and a stock management terminal 300a that are constituent elements of the distribution management system 100. The core distribution center 11a has a stock management terminal 300b. The satellite distribution center 12a has a stock management terminal 300c. The store 13a has a request terminal 310 which is also a constituent element of the distribution management system 100. It should be noted that although in FIG. 3, the network 14 is omitted from the drawing, the terminals are actually connected with one another via the network 14.

### 2. CONFIGURATION OF THE DISTRIBUTION MANAGEMENT SYSTEM

The following describes more in detail the configuration of the distribution management system 100.

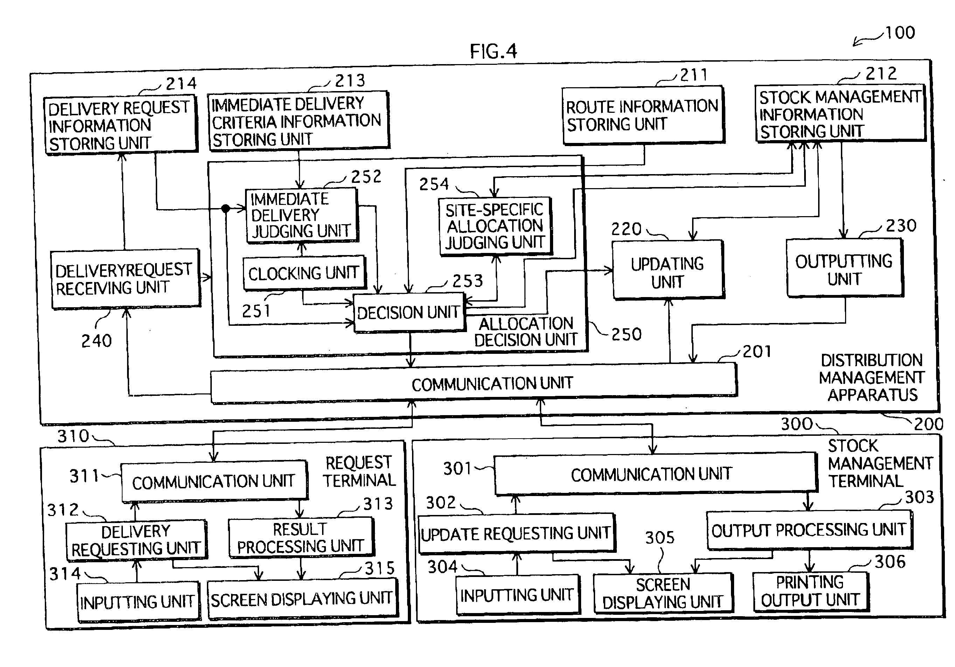

FIG. 4 is a functional diagram of the distribution management system 100.

As shown in the drawing, the distribution management system 100 is structured by connecting, via a network, the distribution management apparatus 200, the request terminal 310 provided at each store, and the stock management terminal 300 provided at the manufacturing factory and each distribution center. It should be noted that the core distribution centers and the satellite distribution centers together will be referred to as "the distribution center". The stock management terminals 300a, 300b, and 300c together will be referred to as "the stock management terminal 300".

The distribution management system 100 includes an input/output device, a storage device such as a memory, and a host computer including communication devices, in terms of hardware. As shown in FIG. 4, the distribution management system 100 comprises a communication unit 201, a route information storing unit 211, a stock management information storing unit 212, an immediate delivery criteria information storing unit 213, a delivery request information storing unit 214, an updating unit 220, an outputting unit 230, a delivery request receiving unit 240, and an allocation decision unit 250, in terms of the functions.

The stock management terminal 300 is structured with a personal computer including input devices such as a keyboard, a mouse, and the like, a display device, a hard disk device, a memory, a CPU, and is connected to a printer, in terms of hardware. As shown in FIG. 4, the stock management terminal 300 comprises a communication unit 301, an update requesting unit 302, an output processing unit 303, an inputting unit 304, a screen displaying unit 305, and a printing output unit 306, in terms of the functions.

Further, like the stock management terminal 300, the request terminal 310 is structured with a personal computer, in terms of hardware. As shown in FIG. 4, the request terminal 310 comprises a communication unit 311, a delivery requesting unit 312, a result processing unit 313, an inputting unit 314, and a screen displaying unit 315, in terms of the functions.

The following describes the functional constituent elements of the apparatuses included in the distribution management system 100.

### 2-1. THE DISTRIBUTION MANAGEMENT APPARATUS

The communication unit 201 in the distribution management apparatus 200 is realized with a communication controlling device. The communication unit 201 is operable to perform communication according to a predetermined communication protocol between the distribution management apparatus 200 and the stock management terminals and the request terminals that are connected to the distribution management apparatus 200 via a network.

The route information storing unit 211 is an area within a storage medium such as a memory or a hard disk and pre-stores therein route information that specifies transportation routes of articles from the manufacturing factory to the stores.

The stock management information storing unit 212 is an area within a storage medium and is for storing therein information for managing, for each of the manufacturing factory and the satellite and core distribution centers, the quantity of articles in stock and the schedules of carrying the articles into and out of the storage, in other words, site-specific stock management information and delivery information.

The immediate delivery criteria information storing unit 213 is an area within a storage medium and pre-stores therein immediate delivery criteria information that indicates, for each kind of articles, an immediate delivery criterion period to be used as a criterion of judgment of whether a delivery is an immediate delivery or not.

The delivery request information storing unit 214 is an area within a storage medium and is for storing therein delivery request information to be transmitted from request terminals 310 provided at the stores.

It should be noted that the route information, the site-specific stock management information, the delivery information, the immediate delivery criteria information, and the delivery request information will be described in detail later.

The updating unit 220 is operable to, when having been informed of the allocation point by the allocation decision unit 250, and when having been instructed by the stock management terminal 300 via the communication unit 201 to update a piece of site-specific stock management information, update such information stored in the stock management information storing unit 212.

The outputting unit 230 is operable to transmit the information stored in the stock management information storing unit 212 to the stock management terminal 300 via the communication unit 201.

The delivery request receiving unit 240 receives a delivery request by receiving a piece of delivery request information from the request terminal 310 via the communication unit 201 and stores the piece of delivery request information into the delivery request information storing unit 214.

The allocation decision unit 250 is operable to, when the delivery request receiving unit 240 has received a delivery request, select an allocation point of the articles for the delivery request, by referring to the delivery request information stored in the delivery information storing unit 214, the immediate delivery criteria information stored in the immediate delivery criteria information storing unit 213, the route information stored in the route information storing unit 211, the site-specific stock management information stored in the stock management information storing unit 212. In other words, the allocation decision unit 250 is operable to select, out of the manufacturing factory and the distribution centers, a distribution point from which the articles currently in stock and/or the articles scheduled to be in stock are allocated to meet the delivery request, and inform the updating unit 220 of the selected allocation point, as well as generate a piece of delivery information using the piece of delivery request information and store the piece of delivery information into the stock management information storing unit 212. The allocation decision unit 250 is also operable to inform the request terminal 310 that the delivery request has been accepted via the communication unit 201. As additional information, there is a possibility that it is impossible to select an allocation point that can meet the delivery request. In such a case, the allocation decision unit 250 informs the request terminal 310 that it is impossible for the delivery request to be accepted, via the communication unit 201.

To describe more in details, as shown in FIG. 4, the allocation decision unit 250 includes a clocking unit 251, an immediate delivery judging unit 252, a decision unit 253, and a site-specific allocation judging unit 254.

The clocking unit 251 is a clock, so to speak, and is operable to measure time lapse. The immediate delivery judging unit 252 is operable to obtain the current date and time from the clocking unit 251 and judge whether a delivery request is an immediate delivery request or not by referring to a piece of delivery request information and the immediate delivery criteria information. The decision unit 253 is operable to, according to the judgment result of the immediate delivery judging unit 252 and by referring to the piece of delivery request information and the route information, specify distribution points, in other words specify the manufacturing factory and which one of the satellite distribution centers and which one of the core distribution centers, and select an allocation point by instructing the site-specific allocation judging unit 254 to judge whether each of the specified distribution points has articles in stock that are allocatable and can meet the delivery request indicated in the piece of delivery request information. The decision unit is further operable to inform the updating unit 220 of the selected allocation point and generate a piece of delivery information and store the piece of delivery information into the stock management information storing unit 212, as well as inform the request terminal 310 of whether the delivery request has been accepted or not via the communication unit 201. The site-specific allocation judging unit 254 is operable to, by referring to the pieces of site-specific stock management information that correspond to the distribution points specified by the decision unit 253, judge whether each of the specified distribution points has articles in stock that are allocatable.

As additional information, the staff working at the distribution point having been selected by the allocation decision unit 250 as the allocation point for a delivery request, in other words, the staff working at the manufacturing factory and the distribution centers and the staff who performs the transportation process work according to the operational rule that they carry the articles out of the distribution point selected as the allocation point and have them transported to the store which is a destination of the delivery indicated in a delivery request, in order to perform the delivery requested in the delivery request. The transporting of the articles is performed according to the predetermined transportation route (See FIG. 1).

The functions of the communication unit 201, the updating unit 220, the outputting unit 230, the delivery request receiving unit 240, and the allocation decision unit 250 are realized through execution, by a CPU, of the control programs stored in the memory of a host computer.

### 2-2. THE STOCK MANAGEMENT TERMINALS

The communication unit 301 in the stock management terminal 300 is operable to perform communication according to a predetermined communication protocol between the stock management terminal 300 and the distribution management apparatus 200 to which the stock management terminal 300 is connected via a network.

The inputting unit 304 is an input device such as a keyboard, a mouse, and the like. The screen displaying unit 305 is a display device. The printing output unit 306 serves as an interface to transfer printing images to a printer.

The updating unit 302 is operable to have a screen of input support displayed by the screen displaying unit 305. The update requesting unit 302 is also operable to, when a user of the stock management terminal 300, i.e. the staff at the manufacturing factory or a distribution center inputs data, via the inputting unit 304 in order to update a piece of site-specific stock management information based on the production and distribution plan of articles, transmit, via the communication unit 301, an instruction to the distribution management apparatus 200 to update the piece of site-specific stock management information, so as to reflect the input by the user.

The outputting unit 303 is operable to obtain a piece of site-specific stock management information or apiece of delivery information that is related to the location at which the stock management terminal is provided and has been transmitted from the distribution management apparatus 200, and have those piece of information shaped and displayed by the screen displaying unit 305, or outputted by the printing output unit 306 to a printer as printing images. It should be noted that the stock management terminal 300 has, according to the location at which the stock management terminal 300 is provided, a distribution point ID for identifying the location pre-stored within itself, for example, in a non-volatile memory or the like. With the use of the pre-stored distribution point ID, the stock management terminal 300 obtains, from the distribution management apparatus 200, a piece of site-specific stock management information or a piece of delivery information related to the location at which the stock management terminal 300 is provided, and has the piece of information displayed and the like.

The functions of the communication unit 301, the update requesting unit 302, and the output processing unit 303 are realized through execution, by a CPU, of the control programs stored in the memory of the personal computer.

### 2-3. THE REQUEST TERMINALS

The communication unit 311 in the request terminal 310 is operable to perform communication according to a predetermined communication protocol between the request terminal 310 and the distribution management apparatus 200 to which the request terminal 310 is connected via a network.

The inputting unit 314 is an input device such as a keyboard, a mouse, and the like. The screen displaying unit 315 is a display device.

The delivery requesting unit 312 is operable to have a screen for inputting a delivery request displayed by the screen displaying unit 315. The update requesting unit 312 is also operable to, when a user of the request terminal 310, i.e. the staff at a store, has inputted data to make a delivery request via the inputting unit 314, generate a piece of delivery request information based on the inputted data and transmit the piece of delivery request information to the distribution management apparatus 200 via the communication unit 311. As additional information, the request terminal 310 has a store ID for identifying the store at which the request terminal 310 is providedpre-storedwithinitself, for example, in a non-volatile memory or the like, and generates the piece of delivery request information with also the use of the store ID.

The result processing unit 313 is operable to obtain information that indicates whether or not the delivery request has been accepted by the distribution management apparatus 200 via the communication unit 311 and has the information displayed by the screen displaying unit 315.

The functions of the communication unit 311, the delivery requesting unit 312, and the result processing unit 313 are realized through execution, by a CPU, of the control programs stored in the memory of the personal computer.

### 3. PRINCIPAL DATA HANDLED IN THE DISTRIBUTION MANAGEMENT SYSTEM

The following describes the principal data handled in the distribution management system 100.

### 3-1. THE DELIVERY REQUEST INFORMATION

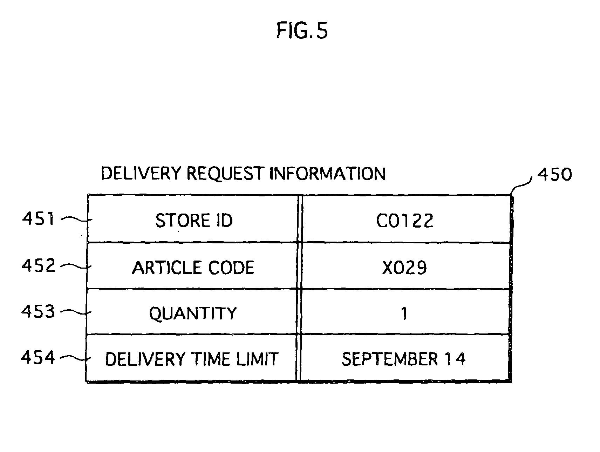

FIG. 5 shows the configuration and an example of what is indicated in a piece of delivery request information.

The delivery request information 450 is generated by the request terminal 310 and stored into the delivery request information storing unit 214 in the distribution management apparatus 200. As shown in the drawing, a piece of delivery request information is structured so as to include a store ID 451, an article code 452, a quantityof articles 453, andadelivery time limit 454.

Here, the store ID 451 is an identifier for identifying a store that has made a delivery request for some articles manufactured at the manufacturing factory 10, out of all the stores that are able to make delivery requests. The article code 452 is an identification code for identifying a kind of article requested in the delivery request, out of all the kinds of articles manufactured at the manufacturing factory 10. The quantity of articles 453 is a quantity of articles requested in the delivery request. The delivery time limit 454 is a date by which the articles should be delivered.

It should be noted that the delivery request information 450 shown in FIG. 5 shows an example in which a store identified with the store ID "C0122" is requesting that one piece of article identified with the article code "X029" should be delivered by September 14.

### 3-2. THE IMMEDIATE DELIVERY CRITERIA INFORMATION

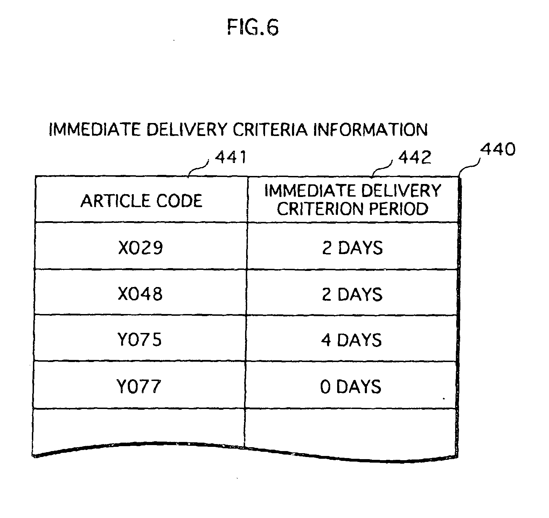

FIG. 6 shows the configuration and an example what is indicated in a piece of immediate delivery criteria information.

The immediate delivery criteria information 440 is pre-stored in the immediate delivery criteria information storing unit 213 in the distribution management apparatus 200 in consideration of sales projection for each kind of articles and the like. As shown in the drawing, in a piece of immediate delivery criteria information 440, each article code 441 is indicated in correspondence with an immediate delivery criterion period 442.

Here, the article codes 441 are identification codes that are provided so that different kinds of articles have different article codes assigned in one-to-one correspondence.

The immediate delivery criterion period 442 is information to be used as a criterion of judgment of whether the delivery time limit 454 indicated in the delivery request information 450 denotes an immediate delivery or a non-immediate delivery. For example, when the immediate delivery criterion period 442 is one day, if the length of time between the day on which a delivery request is made and the delivery time limit is within one day, the delivery is judged to be an immediate delivery. When the immediate delivery criterion period 442 is 0 days, any delivery is judged to be a non-immediate delivery. This judgment of whether a delivery is an immediate delivery or not is made as a part of the allocation processing to be described later.

The example shown in FIG. 6 shows that, for the article identified with the article code "X029", if the length of time between the day on which a delivery request is made and the delivery time limit is within two days, the delivery is judged to be an immediate delivery. As examples of how to utilize the immediate delivery criteria information, for instance, for articles that have been projected to sell well and articles that keep selling by certain quantity for a long period of time, the immediate delivery criterion period may be set in advance to be relatively long. For articles that rarely sells, the immediately delivery criterion period may be set to be short, for example, zero. As for the example shown in FIG. 6, for the kind of articles identified with the article code "Y077", the immediate delivery criterion period is set to be zero, as an exception. It means that a delivery of this kind of articles is always judged to be a non-immediate delivery.

### 3-3. THE ROUTE INFORMATION

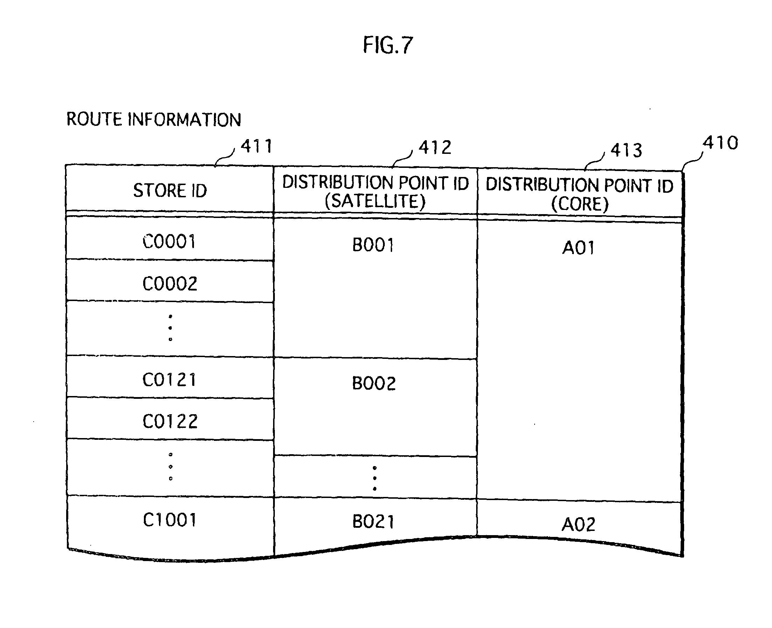

FIG. 7 shows the configuration and an example of what is indicated in the route information.

The route information 410 is pre-stored in the route information storing unit 211 within the distribution management apparatus 200 so as to reflect the transportation routes shown in FIG. 1. The route information 410 is structured so as to include the store IDs 411, the distribution point IDs 412 of the satellite distribution centers, and the distribution point IDs 413 of the core distribution centers.

Here, the store IDs 411 are identifiers for identifying stores. The distribution point IDs 412 and 413 are identifiers for identifying distribution centers.

In the example shown in FIG. 7, the store identified with the store ID "C0001" receives articles that are transported via the core distribution center identified with the distribution point ID "A01" and the satellite distribution center identified with the distribution point ID "B001" in the stated order. As another example, the store identified with the store ID "C0122" receives articles that are transported via the core distribution center identified with the distribution point ID "A01" and the satellite distribution center identified with the distribution point ID "B002" in the stated order.

### 3-4. INFORMATION STORED IN THE STOCK MANAGEMENT INFORMATION STORING UNIT

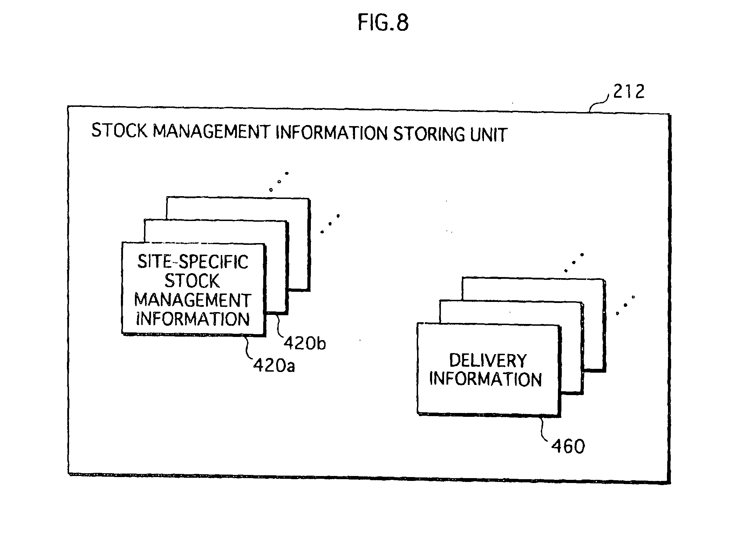

FIG. 8 shows information stored in the stock management information storing unit 212 within the distribution management apparatus 200.

As shown in the drawing, the stock management information storing unit 212 stores therein pieces of site-specific stock management information that are in one-to-one correspondence with the manufacturing factory and the distribution centers. In addition, every time a delivery request is made, a piece of delivery information that is in one-to-one correspondence with each delivery request is generated and stored into the stock management information storing unit212. The pieces of delivery information are deleted after the delivery time limit indicated in each of the delivery requests.

### 3-4-1. THE SITE-SPECIFIC STOCK MANAGEMENT INFORMATION

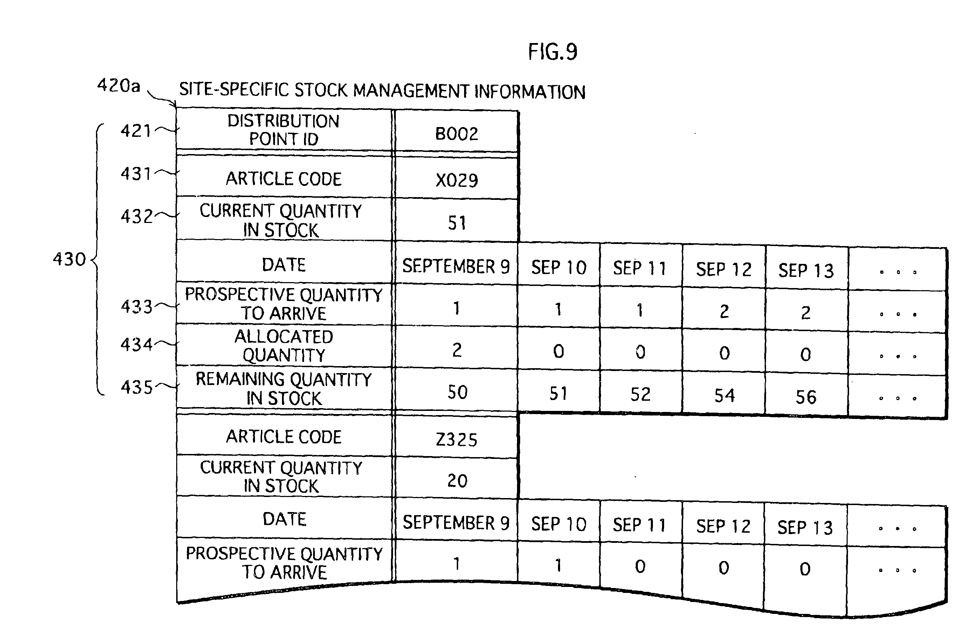

FIG. 9 shows the configuration and an example of what is indicated in a piece of site-specific stock management information that corresponds to a satellite distribution center.

The piece of site-specific stock management information 420a that corresponds to a distribution center is stored in the stock management information storing unit 212 and used to manage the articles in stock for each kind of articles. The pieces of site-specific stock management information are updated whenever necessary, for example, every time a transportation schedule of articles is fixed. The piece of site-specific stock management information 420a is structured so as to include a distribution point ID 421 and article data 430 for each kind of articles handled in the corresponding distribution center. The article data 430 is structured so as to include an article code 431, a current quantity in stock 432, a prospective quantity to arrive 433 for each of the dates, an allocated quantity 434 for each of the dates, and a remaining quantity in stock 435 for each of the dates.

Here, the distribution point ID 421 is an identifier of a distribution center. The distribution point ID 421 of a satellite distribution center, for example, serves to identify the satellite distribution center out of different distribution centers.

The article codes 431 are identification codes that are provided so that different kinds of article have different article codes assigned in one-to-one correspondence. The article codes 431 corresponding to a satellite distribution center each serve, for example, as an identification code of a kind of article handled in the satellite distribution center.

The current quantity in stock 432 shows the quantity of the specified articles that are currently in stock at the distribution center.

The prospective quantity to arrive 433 shows, for each of the dates, the quantity of articles to arrive at the distribution center. The allocated quantity 434 shows, for each of the dates, the quantity of the specified articles that have been allocated in response to one or more delivery requests. The remaining quantity in stock 435 shows, for each of the dates, the quantity of articles in stock that are supposed to remain at the end of the day. In other words, the remaining quantity in stock 435 is calculated by subtracting the sum of the allocated quantities of articles for all of the dates from the sum of the current quantity in stock and the prospective quantity to arrive.

In the example shown in FIG. 9, in the storage of the satellite distribution center identified with the distribution point ID "B002", 51 pieces of articles identified with the article code "X029" are stored as of September 9. On September 9, one piece is scheduled to arrive, and two pieces from the articles in stock on that day are allocated in response to one or more delivery requests; therefore, fifty pieces of articles remain in stock as allocatable articles.

It should be noted that the staff at the satellite distribution center is able to acknowledge the piece of site-specific stock management information 420a via the stock management terminal 300. Since two pieces of articles identified with the article code "X029" are allocated on September 9, for example, the staff starts, either on September 9 or 10, the action of carrying out all the articles that have been allocated including those two pieces of articles identified with the article code "X029", and has the articles transported on a small-sized truck to the store on September 10. Here, it should be noted that the staff works in accordance with the operational rule that the articles that have been registered as being allocated on a certain day according to the "allocated quantity" indicated in a piece of site-specific stock management information are shipped on the following day, and the staff at the distribution center starts the action of having the articles transported on the same day as the day on which the articles are shipped.

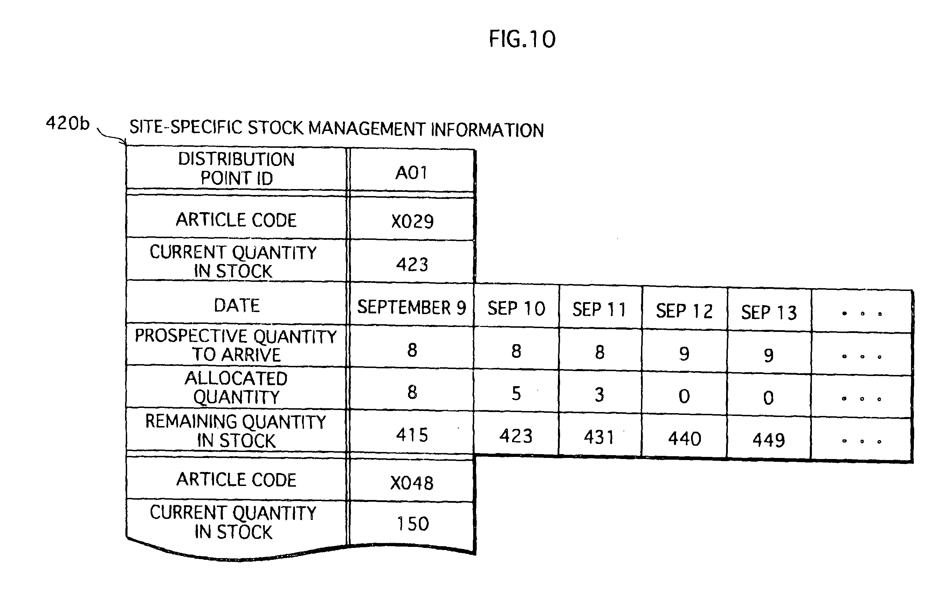

FIG. 10 shows an example of what is indicated in a piece of site-specific stock management information that corresponds to a core distribution center.

In the example shown in the drawing, in the storage of the core distribution center identified with the distribution point ID "A01", 423 pieces of articles identified with the article code "X029" are stored as of September 9. On September 9, eight pieces are scheduled to arrive, and eight pieces from the articles in stock on that day are allocated in response to one or more delivery requests; therefore, 415 pieces of articles remain in stock as allocatable articles. Further, on September 11, three pieces of articles identified with the article code "X029" have been allocated. Here, it should be noted that the quantity of articles that have been allocated as indicated in the piece of site-specific stock management information corresponding to the core distribution center includes the quantity of articles to be transported from the core distribution center to a satellite distribution center according to a distribution plan of the articles, as well as the quantity of articles that have been allocated in response to delivery requests from stores.

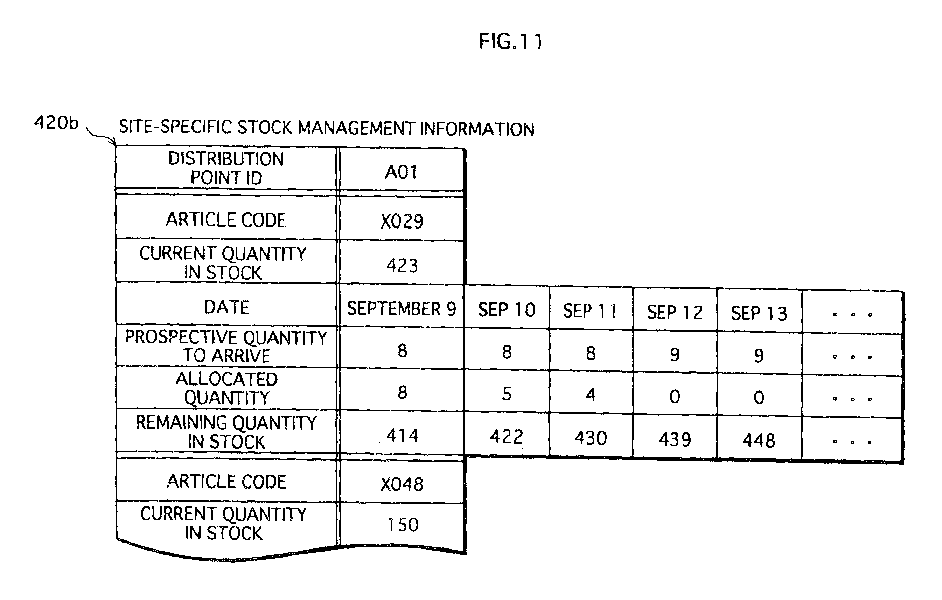

FIG. 11 shows an example of what is indicated in a piece of site-specific stock management information after the piece of information shown in FIG. 10 is updated.

The example shown in FIG. 11 is an example of a piece of site-specific stock management information after an update is made to the example shown in FIG. 10, reflecting (i) a delivery request made for one piece of article identified with the article code "X029" and (ii) one piece of the article out of the articles in stock as of September 11 has been allocated in response to the delivery request. Consequently, FIG. 11 differs from FIG. 10 in that FIG. 11 has one more allocated article on September 11, and thus the remaining quantity of articles in stock on September 9 and thereafter is reduced by one, on each of the dates.

### 3-4-2. THE DELIVERY INFORMATION

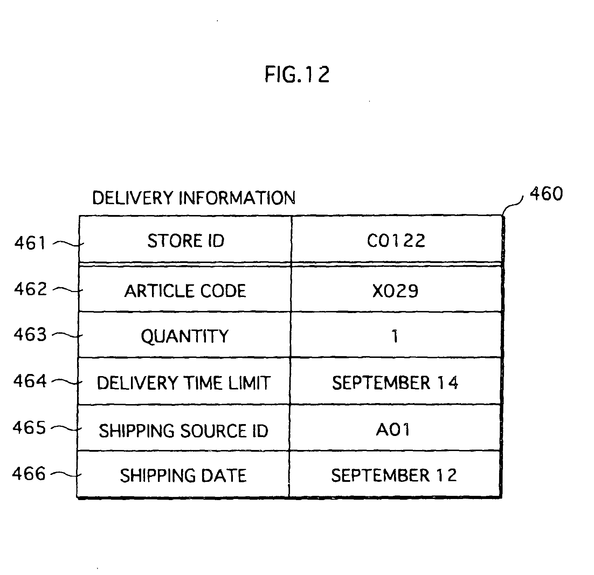

FIG. 12 shows the configuration and an example of what is indicated in a piece of delivery information.

The delivery information 460 is to be stored into the stock management information storing unit 212 by the allocation decision unit 250 within the distribution management apparatus 200, after an allocation point is decided in response to a delivery request. The delivery information 460 is structured so as to include a store ID 4 61, an article code 462, a quantity of articles 463, a delivery time limit 464, a shipping source ID 465, and a shipping date 466.

Here, the store ID 461, the article code 462, the quantity of articles 463, and the delivery time limit 464 are the same as the store ID 451, the article code 452, the quantityof articles 4 53 and the delivery time limit 454 indicated in a piece of delivery request information and are copied from the piece of delivery request information and determined by the allocation decision unit 250.

The shipping source ID 465 is a distribution point ID for identifying a manufacturing factory or a distribution center from which the articles in stock are allocated in response to a delivery request.

The shipping date 466 is a shipping date for the articles, in other words, a date on which the articles are scheduled to be shipped from a manufacturing factory or a distribution center.

The example shown in FIG. 12 indicates that, as an allocation point for the articles requested in the delivery request information 450 shown in FIG. 5, the core satellite center identified with a distribution point ID "A01" has been selected and the requested articles are scheduled to be shipped from the core distribution center on September 12.

### 4. OPERATION OF THE DISTRIBUTION MANAGEMENT SYSTEM

The following describes the operation of the distribution management system that is structured with the aforementioned configuration and handles the various kinds of data mentioned above.

### 4-1. OPERATION AND PROCESSING

First, the following describes the delivery request processing to be performed by the request terminal 310 provided at a store, in response to a delivery request for articles that is made by the staff at the store.

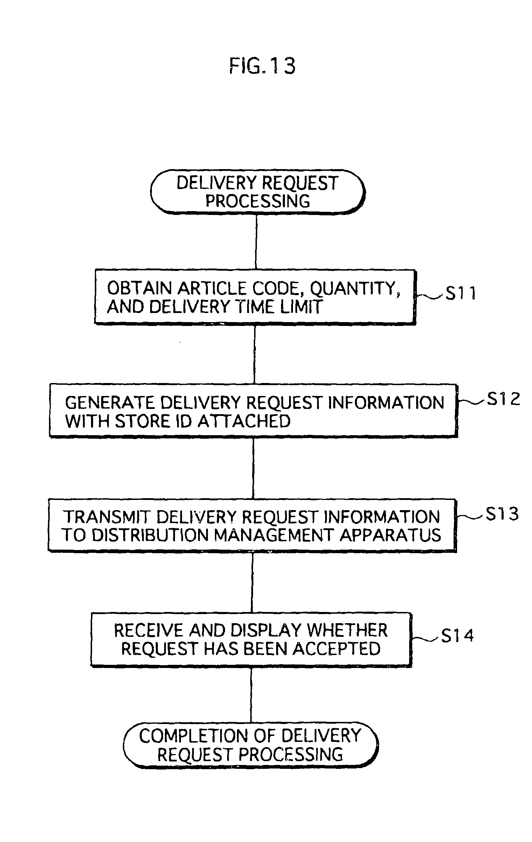

FIG. 13 is a flow chart that shows the delivery request processing to be performed by the request terminal 310.

On the request terminal 310, the delivery requesting unit 312 has an input screen displayed by a screen displaying unit 315 and obtains an article code, a quantity of articles, and a delivery time limit which are inputted by the staff at a store (Step S11).

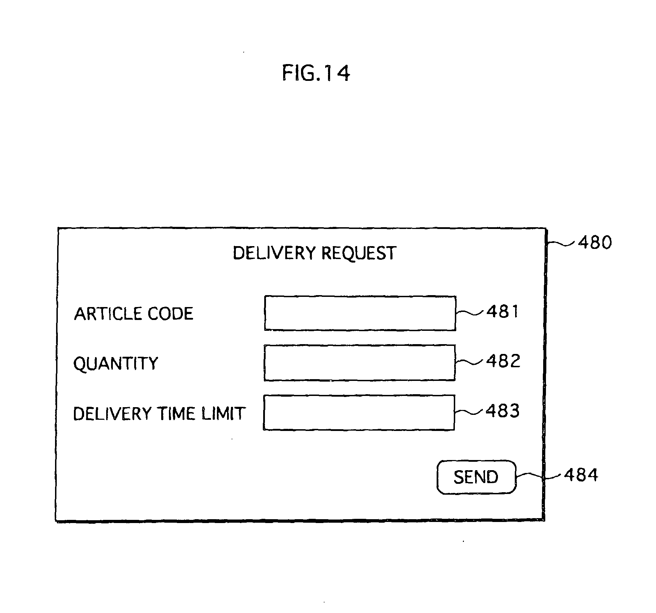

FIG. 14 shows an example of the input screen on which an article code and the like can be inputted on the request terminal 310.

To be more specific, in Step S11, the delivery requesting unit 312 within the request terminal 310 has an input screen 480 displayed by the screen displaying unit 315, the input screen having an article code field 481, a quantity field 482, and a delivery-time-limit field 483. When the staff has inputted data into these fields via the inputting unit 314 and pushed the send button 484, the delivery requesting unit 312 obtains the data as the article code, the quantity, and the delivery time limit.

After the process in Step S11 is performed, the delivery requesting unit 312 attaches the pre-stored store ID to the obtained article code and the like so as to generate a piece of delivery request information (See FIG. 5) (Step S12).

Having generated the piece of delivery request information, the delivery requesting unit 312 transmits the piece of delivery request information to the distribution management apparatus 200 via the communication unit 311 (Step S13). Delivery requests from the request terminal 310 are each realized through transmission of a piece of delivery request information performed in Step S13. In response to such a delivery request, the distribution management apparatus 200 performs allocation processing, which is to be described later, and thereby transmits information indicating whether the delivery request has been accepted or not to the request terminal 310.

The result processing unit 313 within the request terminal 310 then receives the information indicating whether the delivery request has been accepted or not via the communication unit 311 and controls the screen displaying unit 315 so that the information is displayed (Step S14). Thus, the delivery request processing of is completed.

Accordingly, the staff at the store is able to find out if a delivery request has been accepted or not, and in the case where a delivery request has not been accepted, the staff is able to make another delivery request by inputting data again into the input screen (See FIG. 14) with, for example, a different delivery time limit.

Next, the following describes the processing performed by the distribution management apparatus 200 in response to a delivery request.

The delivery request receiving unit 240 within the distribution management apparatus 200 obtains the piece of delivery request information transmitted from the request terminal 310 via the communication unit 201, stores the piece of delivery request information into the delivery request information storing unit 214. Subsequently, the allocation decision unit 250 and the like perform the allocation processing to allocate articles in stock in response to the delivery request.

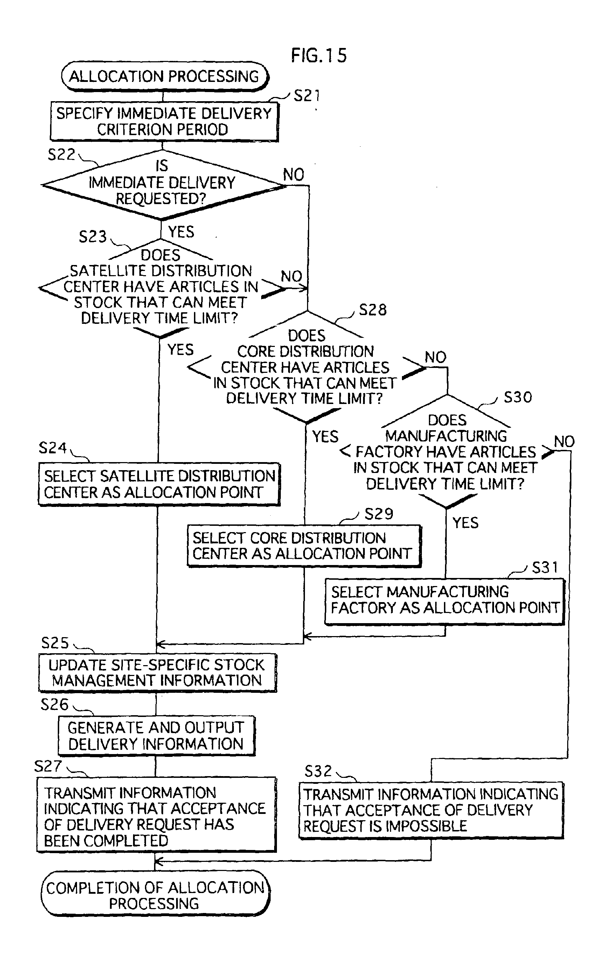

FIG. 15 is a flowchart that shows the allocation processing performed by the distribution management apparatus 200.

The immediate delivery judging unit 252 within the allocation decision unit 250 specifies a value of the immediate delivery criterion period corresponding to the article code that is, out of the article codes shown in the immediate delivery criteria information stored in the immediate delivery criteria information storing unit 213, identical to the article code in the piece of delivery request information indicating a delivery request and being stored in the delivery request information storing unit 214 (Step S21). When the length of time between the current date and time obtained by the clocking unit 251 and the delivery time limit indicated in the piece of delivery request information is equal to or shorter than the immediate delivery criterion period, the delivery request is judged to be an immediate delivery request. When the length of time is longer than the immediate delivery criterion period, the delivery request is judged to be a non-immediate delivery request (Step S22).

When the immediate delivery judging unit 252 within the allocation decision unit 250 has judged that the delivery request is an immediate delivery request in Step S22, the decision unit 253 specifies a satellite distribution center identified with a distribution point ID that corresponds to the store ID indicated in the piece of delivery request information, by referring to the route information stored in the route information storing unit 211, and provides the piece of delivery request information and instructs the site-specific allocation judging unit 254 to judge whether the identified satellite distribution center has articles in stock that can meet the delivery request (Step S23). In Step S23, the site-specific allocation judging unit 254 judges whether or not the satellite distribution center currently has the articles in stock and/or will have the articles scheduled to be in stock that can be shipped to meet the delivery time limit indicated in the piece of delivery request information by the quantity equal to or larger than the quantity indicated in the piece of delivery request information, by referring to the piece of site-specific stock management information that corresponds to the satellite distribution center and is stored in the stock management information storing unit 212.

In Step S23, in the case where the site-specific allocation judging unit 254 has judged that the satellite distribution center has the articles in stock that can meet the delivery request, the site-specific allocation judging unit 254 decides an allocation date, in other words, decides from the stock as of which date, the articles at the satellite distribution center are to be allocated, and selects the satellite distribution center as the allocation point (Step S24).

Further, the decision unit 253 copies the piece of delivery request information andgenerates apiece of delivery information so as to include the distribution point ID of the distribution center selected by the cite-specific allocation judging unit 254 as the shipping source ID and the next day of the allocation date as the shipping date, and stores the piece of delivery information into the stock management information storing unit 212. Additionally, the decision unit 253 instructs the updating unit 220 to update the piece of site-specific stock management information for the particular distribution center (Step S25). This update is made by increasing, by the quantity indicated in the delivery request, the allocated quantity that is shown in the piece of site-specific stock management information and is for the decided allocation date of the articles that are identified with the article code indicated in the delivery request, and reducing the remaining quantity in stock so as to reflect the increase of the allocated quantity.

After the process in Step S25 is performed, the outputting unit 230 transmits, via the communication unit 201, the piece of delivery information stored in the stock management information storing nit 212 to the stock management terminal 300 provided at the distribution center identified with the shipping source ID indicated in the piece of delivery information (Step S26). The decision unit 253 within the allocation decision unit 250 transmits, via the communication unit 201, information indicating that the delivery request has been accepted to the request terminal 310 provided at the source that has made the delivery request (Step S27). Thus, the allocation process has been completed.

In the case where the immediate delivery judging unit 252 has judged that the delivery request is a non-immediate delivery request in Step S22, or the site-specific allocation judging unit 254 has judged that the satellite distribution center does not have the articles in stock that can be shipped to meet the delivery time limit in Step S23, the decision unit 253 specifies a core distribution center identified with the distribution point ID that corresponds to the store ID indicated in the piece of delivery request information by referring to the route information stored in the route information storing unit 211, and provides the piece of delivery request information and instructs the site-specific allocation judging unit 254 to judge whether the identified core distribution center has articles in stock that can meet the delivery request (Step S28). In Step S28, the site-specific allocation judging unit 254 judges whether or not the core distribution center currently has the articles in stock and/or will have the articles scheduled to be in stock that can be shipped to meet the delivery time limit indicated in the piece of delivery request by the quantity equal to or larger than the quantity indicated in the piece of delivery request information, by referring to the piece of site-specific stock management information that corresponds to the core distribution center and is stored in the stock management information storing unit 212.

In Step S28, in the case where the site-specific allocation judging unit 254 has judged that the core distribution center has the articles in stock that can meet the delivery request, the site-specific allocation judging unit 254 decides an allocation date, and selects the core distribution center as the allocation point (Step S29). Then, the decision unit 253 advances to the processing described above in Step S25 and thereafter.

In the case where the site-specific allocation judging unit 254 has judged that the core distribution center does not have the articles in stock that can be shipped to meet the delivery time limit in Step S28, the decision unit 253 specifies the manufacturing factory and provides the piece of delivery request information and instructs the site-specific allocation judging unit 254 to judge whether the manufacturing factory has articles in stock that can meet the delivery request (Step S30). In Step S30, the site-specific allocation judging unit 254 judges whether or not the manufacturing factory currently has the articles in stock and/or will have the articles scheduled to be in stock that can be shipped to meet the delivery time limit indicated in the piece of delivery request information by the quantity equal to or larger than the quantity indicated in the piece of delivery request information, by referring to the piece of site-specific stock management information that corresponds to the manufacturing factory and is stored in the stock management information storing unit 212.

In Step S30, in the case where the site-specific allocation judging unit 254 has judged that the manufacturing factory has the articles in stock that can meet the delivery request, the site-specific allocation judging unit 254 decides an allocation date, and selects the manufacturing factory as the allocation point (Step S31). Then, the decision unit 253 advances to the processing described above in Step S25 and thereafter.

In Step S30, in the case where the site-specific allocation judging unit 254 has judged that the manufacturing factory does not have the articles in stock that can be shipped to meet the delivery time limit, the decision unit 253 transmits, via the communication unit 201, information indicating that it is impossible for the delivery request to be accepted, to the request terminal 310 provided at the source that has made the delivery request (Step S32). Thus, the allocation process has been completed.

It should be noted that, in Step S26, the piece of delivery information is transmitted from the distribution management apparatus 200 to the stock management terminal 300 provided at a distribution center or the manufacturing factory that has been selected as an allocation point. In response to this transmission, the outputting unit 303, which is in the stock management terminal 300 at the distribution center or the manufacturing factory that has been selected as the allocation point, obtains the piece of delivery information via the communication unit 301 and has the piece of delivery information displayed by the screen displaying unit 305, as well as has a printer print out the piece of delivery information via the printing output unit 306. As a result, the staff at the distribution center or the manufacturing factory that has been selected as the allocation point checks the piece of delivery information that has been displayed and printed so as to understand when and how many pieces of which kind of article should be shipped. Accordingly, the staff carries out the articles from the storage and loads the articles onto a truck. Subsequently, the articles are transported on the truck.

Further, the staff at each of the distribution centers and the manufacturing factory including the one that has been selected as an allocation point is able to perform an input operation using the stock management terminal 300 in order to update the pieces of site-specific stock management information stored in the distribution management apparatus 200, in accordance with necessity to adapt the information to fit manufacturing plans or distribution plans of the articles. The update requesting unit 302 receives the input operation via the inputting unit 304 and updates the pieces of site-specific stock management information within the stock management information storing unit 212, via the communication unit 301 and via the communication unit 201 and the updating unit 220 within the distribution management apparatus 200. The result of the update is transferred to the output processing unit 303 via the outputting unit 230, the communication unit 201, and the communication unit 301. The outputting processing unit 303 has each of the pieces of site-specific stock management information after the update displayed by the screen displaying unit 305.

Further, the staff at each of the distribution centers carries articles into and out of the distribution center according to the pieces of site-specific stock management information. In addition, it should be noted that distribution plans and the like may be updated occasionally, and, like in a normal distribution method, are utilized in such a manner that, for example, when the quantity of articles in stock at a satellite distribution center has become low, articles in stock at a core distribution center are used to make up the stock at the satellite distribution center.

### 4-2. SPECIFIC EXAMPLE OF OPERATIONS

The following describes the operation of the distribution management system 100 with a specific example.

Here, explanation is provided for a case in which the store 13a shown in FIGs. 1, 2, and 3 requests, on the morning of September 9, to have one piece of the article identified with the article code "X029" delivered with September 14 as the delivery time limit. It should be noted that the following explanation is provided based on the following premise: the store ID of the store 13a is "C0122"; the route information 410 shown in FIG. 7 as an example is stored in the route information storing unit 211; pieces of site-specific stock management information including the piece of site-specific stock management information 420a shown in FIG. 9 as an example and the piece of site-specific stock management information 420b shown in FIG. 10 as an example are stored in the stock management information storing unit 212; and the immediate delivery criteria information 440 shown in FIG. 6 as an example is stored in the immediate delivery criteria information storing unit 213.

First, the staff at the store 13a operates the request terminal 310 to have the input screen 480 shown in FIG. 14 displayed on the display device. The staff inputs "X029" into the article code field 481, "1" into the quantity field 482, and "September 14" in the delivery-time-limit field 483, using a mouse and a keyboard, and pushes the send button 484.

In response to the operation, the request terminal 310 obtains the article code "X029", the quantity "1", and the delivery time limit "September 14" (Step S11), and generates a piece of delivery request information from the obtained information and the store ID "C0122", which is pre-stored in the request terminal 310 (Step S12). Thus, a piece of delivery request information as shown in FIG. 5 has been generated. Next, the request terminal 310 transmits the piece of delivery request information to the distribution management apparatus 200, and thereby a delivery request from the store 13a has been made (Step S13).

Having received the delivery request, the distribution management apparatus 200 stores the received piece of delivery request information into the delivery request information storing unit 214. The distribution management apparatus 200 specifies that the immediate delivery criterion period for the article identified with the article code "X029" indicated in the piece of delivery request information is two days, based on the immediate delivery criteria information 440 stored in the immediate delivery criteria information storing unit 213. Then, the distribution management apparatus 200 judges that the delivery is not an immediate delivery, since the delivery time limit indicated in the piece of delivery request information is September 14, and the length of time from September 9 is six days including those dates and is longer than the immediate delivery criterion period (Step S22). It should be noted that the location decision unit 250 has a function of calendar calculation and calculates that the length of time between September 9 and September 14 is six days using the function. Conversely, when the length of time before the delivery time limit is equal to or shorter than the immediate delivery criterion period, a delivery is judged to be an immediate delivery.

In this example, since the delivery has been judged to be a non-immediate delivery in Step S22, the allocation decision unit 250 within the distribution management apparatus 200 advances to the process in Step S28 and judges whether the core distribution center has the article in stock that meets the delivery time limit.

In other words, the allocation decision unit 250 specifies that the distribution point ID of the core distribution center that corresponds to the store ID "C0122" indicated in the piece of delivery request information is "A01" based on the route information 410 stored in the route information storing unit 211, i. e. the allocation decision unit 250 specifies that the distribution point ID of the core distribution center 11a shown in FIGs. 1, 2, and 3 is "A01". The allocation decision unit 250 then refers to the piece of site-specific stock management information 420b that is for the core distribution center 11a and is stored in the stock management information storing unit 212. Subsequently, the allocation decision unit 250 judges whether or not it is possible to have the article identified with the article code "X029" delivered to the store by September 14 according to the piece of site-specific stock management information 420b.

In this case, as for the transportation period from the core distribution center to the store, it takes one more day to route the article through the satellite distribution center and have transshipment there. Accordingly, in order to meet the delivery time limit, the article needs to be shipped by September 13, and therefore the article in stock as of September 12 or before needs to be allocated for the delivery request.

According to the example of the piece of site-specific stock management information 420b shown in FIG. 10, since the core distribution center has enough articles in stock to meet the delivery time limit, the allocation decision unit 250 selects the core distribution center as an allocation point (Step S29).

Further, the allocation decision unit 250 decides the allocation date for the article in stock by performing a predetermined calculation based on the shipment schedules of other articles on and before September 12. Here, explanation is provided on a premise that the article in stock as of September 11 is allocated for the delivery request, and the shipping date has been decided as September 12. Then, the allocation decision unit 250 updates the piece of site-specific stock management information 420b shown in FIG. 10, via the updating unit 220 (Step S25). This update is to change the allocated quantity as of September 11 from "3" to "4"within the piece of site-specific stock management information. Accordingly, the remaining quantity of articles in stock for each of the dates is also updated. As a result, the piece of site-specific stock management information is updated as shown in FIG. 11. In addition, the allocation decision unit 250 adds information indicating the decided shipping date and the distribution center selected as an allocation point to the piece of delivery request information, so as to generate a piece of delivery information 460 as shown in FIG. 12 and stores the piece of delivery information into the stock management information storing unit 212. In response to this, the outputting unit 230 transmits the piece of delivery information 460 to the stock management terminal 300b provided at the core distribution center 11a, via the communication unit 201 (Step S26).

Having received the transmission in Step S26, the stock management terminal 300b has the piece of delivery information 460 displayed on a display device and printed on a printer. It should be noted that the piece of delivery information 460 is printed on the printer in a predetermined delivery invoice format. The staff at the core distribution center 11a carries the article "X029" out of the storage in time for the shipping date and loads the article onto a middle-sized truck along with other articles for other delivery requests. The article that corresponds to the delivery request from the store 13a is loaded on the middle-sized truck along with other articles and transported towards the satellite distribution center 12a on September 12, which is the shipping date, and, after being transshipped at the satellite distribution center 12a, is transported to the store 13a on September 13 on a small-sized truck.

After the process in Step S26 is performed, the allocation decision unit 250 transmits information indicating that acceptance of the delivery request is completed to the request terminal 310, which is the transmission source of the piece of delivery request information, via the communication unit 201 (Step S27). In response to this, the request terminal 310 at the store 13a displays on the screen displaying unit 315 that the delivery request has been accepted (Step S14). It should be noted that a host computer is selected so that the period of time required for the distribution management apparatus 200 to execute the allocation processing (FIG. 15) for a piece of delivery request information is less than an hour, although the period of time will vary depending on the performance level of the host computer. After the staff has inputted information related to a delivery request into a request terminal 310, the staff is able to find out if the delivery request has been accepted or not in a short period of time.

Next, the following describes the operation of the distribution management system in a case where the staff at the store 13a requests a piece of article identified with the article code "X029" with September 10 as the delivery time limit. The description below is provided for the case in which the delivery time limit indicated in the delivery request is September 10, unlike the aforementioned example in which the delivery time limit was September 14, and other conditions of the premise are the same as in the aforementioned example.

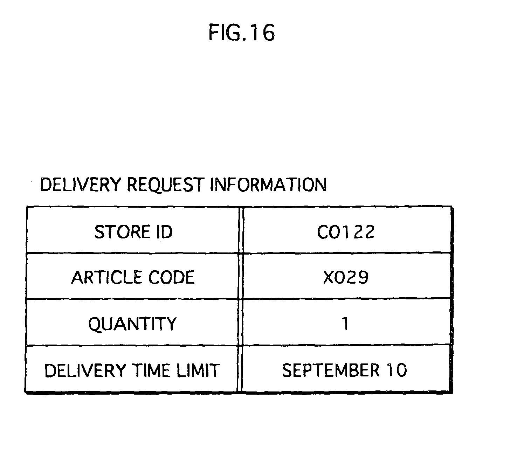

First, the staff at the store 13a inputs a delivery request on the request terminal 310. The request terminal 310 transmits the piece of delivery request information to the distribution management apparatus 200. It should be noted that the piece of delivery request information in this case is shown in FIG. 16.

In response to this, the distribution management apparatus 200 stores the received piece of delivery request information into the delivery request information storing unit 214, and specifies that the immediate delivery criterion period for the article identified with the article code "X029" indicated in the piece of delivery request information is two days, based on the immediate delivery criteria information 440 stored in the immediate delivery criteria information storing unit 213. Then, the distribution management apparatus 200 judges that the delivery request is an immediate delivery request, since the delivery time limit indicated in the piece of delivery request information is September 10, and the length of time from September 9 is two days including those dates and is equal to the immediate delivery criterion period (Step S22).

In this case, since the delivery request has been judged to be an immediate delivery request in Step S22, the allocation decision unit 250 advances to the process in Step S23 and judges whether the satellite distribution center has the article in stock that meets the delivery time limit.

In other words, the allocation decision unit 250 specifies that the distribution point ID of the satellite distribution center that corresponds to the store ID "C0122" indicated in the piece of delivery request information is "B002" based on the route information 410 stored in the route information storing unit 211, i. e. the allocation decision unit 250 specifies that the distribution point ID of the satellite distribution center 12a shown in FIGs. 1, 2, and 3 is "B002". The allocation decision unit 250 then refers to the piece of site-specific stock management information 420a that is for the satellite distribution center 12a and is stored in the stock management information storing unit 212. Subsequently, the allocation decision unit 250 judges whether or not it is possible to have the article identified with the article code "X029" delivered to the store by September 10 according to the piece of site-specific stock management information 420a.

It should be noted that in this case the article needs to be shipped by September 10, and therefore the article in stock as of September 9 or before needs to be allocated for the delivery request.

According to the example of the piece of site-specific stock management information 420a shown in FIG. 9, since the satellite distribution center has enough articles in stock to meet the delivery time limit, the allocation decision unit 250 selects the satellite distribution center as the allocation point (Step S24).

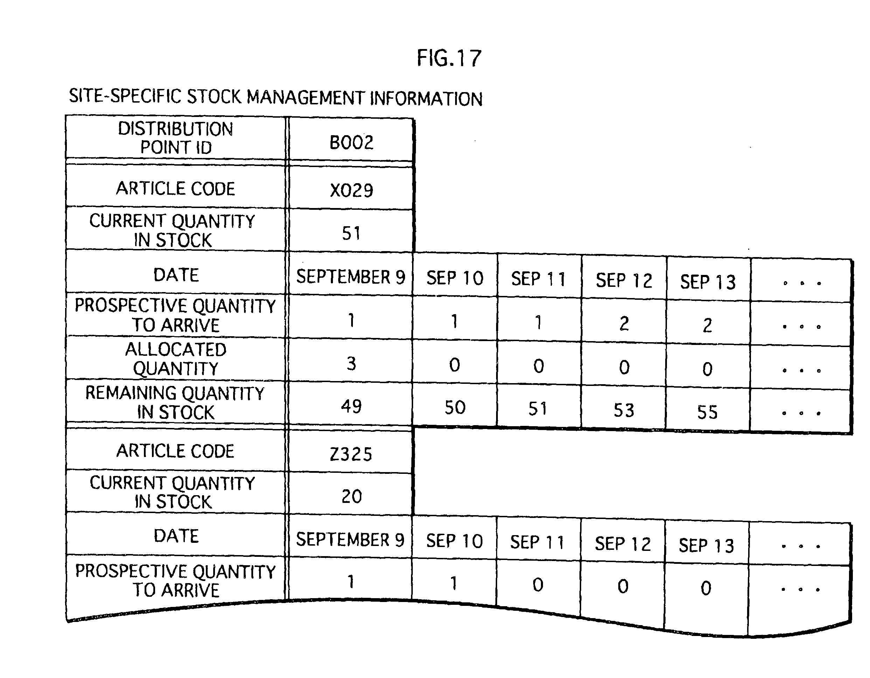

Further, the allocation decision unit 250 decides that the article in stock as of September 9 is allocated for the delivery request and decides the shipping date as September 10. The allocation decision unit 250 updates the piece of site-specific stock management information 420a shown in FIG. 9 via the updating unit 220 (Step S25). Aftertheupdate, the piece of site-specific stock management information looks like the one shown in FIG. 17.

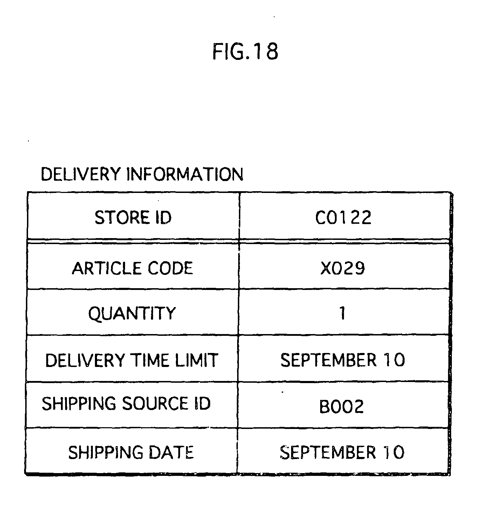

After the process in Step S25 is performed, the allocation decision unit 250 adds information indicating the decided shipping date and the distribution center selected as an allocation point to the piece of delivery request information, so as to generate a piece of delivery information, and stores the piece of delivery information into the stock management information storing unit 212. In response to this, the outputting unit 230 transmits the piece of delivery information to the stock management terminal 300c located at the satellite distribution center 12a, via the communication unit 201 (Step S26). The piece of delivery information transmitted at this time is shown in FIG. 18.

Having received the transmission in Step S26, the stock management terminal 300c has the piece of delivery information displayed on a display device and printed on a printer.

After the process in Step S26 is performed, the allocation decision unit 250 transmits information indicating that acceptance of the delivery request is completed to the request terminal 310, which is the transmission source of the piece of delivery request information, via the communication unit 201 (Step S27). In response to this, the request terminal 310 at the store 13a displays on the screen displaying unit 315 that the delivery request has been accepted (Step S14).

As explained above, when the delivery time limit specified in a delivery request indicates an immediate delivery, the distribution management system 100 selects the satellite distribution center located closest, on the distribution route, to the store to which the articles are to be delivered, as the allocation point from which the articles in stock are allocated for the delivery request. When the delivery time limit specified in a delivery request indicates a non-immediate delivery, the distribution management system 100 selects the core distribution center that is on the distribution route and corresponds to the store to which the articles are to be delivered, as the allocation point from which the articles in stock are allocated for the delivery request. Thus, according to the distribution management system 100 of the present invention, when a delivery request is an immediate delivery request, the articles specified in the delivery request are carried out of a storage of the satellite distribution center located closest to the store that has made the request and transported to the store. When a delivery request is a non-immediate delivery request, the articles specified in the delivery request are carried out of a storage of the core satellite distribution center and transported to the store after being routed through the satellite distribution center. Consequently, without particularly having to increase the quantity of the articles in stock at the satellite distribution center, it is possible to promptly respond to an immediate delivery request made by a store.

### 5. SUPPLEMENTARY INFORMATION

So far, explanation has been provided on an embodiment of the distribution management system of the present invention; however, it is possible to partially modify the distribution management system as described below. The present invention is not limited to the distribution management system 100 described in the embodiment above, needless to say.
(1) The aforementioned embodiment illustrates the examples of the locations of the distribution points that constitute the distribution route on which the articles are transported, the distribution points being, for example, the manufacturing factory and the distribution centers, as well as the sizes of the storage owned by each distribution point, and takes trucks as an example of transporting means to be used on the distribution routes. The present invention, however, is not limited to these examples. It is acceptable that, for example, the manufacturing factory is located in an urban area, and the transportation means are trains or airplanes.
   Additionally, in the embodiment, explanation is provided on distribution of articles of goods. However, it is possible to apply the distribution management system of the present invention to distribution management with distribution routes on which items that are not articles of goods are transported to a specific destination after being routed through a plurality of distribution points. The number of distribution points located on a distribution route may be any number as long as there is more than one. The end of a distribution route does not have to be a store. It is acceptable if the end of a distribution route is a place for renting some items or supplying some food or drink items.
   Specifically, it is possible to promptly respond to an immediate delivery request, without particularly having to increase the quantity of articles in stock at a distribution point located closest to the destination when there is an arrangement as follows: When a delivery request in which the delivery time limit is indicated is an immediate delivery request, a distribution point that is located closest, out of the plurality of distribution points located on the predetermined distribution route, to the destination of delivery on the distribution route is selected as the allocation point, as long as the distribution point currently and/or prospectively has articles that can meet the delivery request. When the closest distribution point does not have articles that can meet the delivery request, the distribution management system or apparatus seeks for a distribution point that has articles to meet the delivery request by checking distribution points one by one, farther and farther away from the destination, and selects such a distribution point as the allocation point. When a delivery request is a non-immediate delivery request, a distribution point that is located second-closest, out of the plurality of distribution points located on the predetermined distribution route, to the destination of delivery on the distribution route, as long as the distribution point currently and/or prospectively has articles that can meet the delivery request. When the second-closest distribution point does not have articles that can meet the delivery request, the distribution management system or apparatus seeks for a distribution point that has articles to meet the delivery request by checking distribution points one by one, farther and farther away from the destination, and selects such a distribution point as the allocation point.
   It should be noted that, when a delivery request is a non-immediate delivery request, it is acceptable that the distribution management system or apparatus checks the distribution points one by one, starting from the third-closest distribution point or a farther distribution point, instead of the second-closest distribution point on the distribution route.
(2) In the embodiment described above, the distribution management apparatus 200 is provided at the manufacturing factory; however, it is acceptable that the distribution management apparatus 200 is provided at another distribution point or another location. The functions of the distribution management apparatus 200 may be divisionally realized by a plurality of computers provided at different places. Alternatively, part or all of the functions that are described in the embodiment as being realized through execution of a controlling program may be realized by hardware.
   It is acceptable that the stock management terminal 300 is provided at a location other than a distribution point.
   In the embodiment described above, the request terminal 310 is provided at a store; however, it is acceptable that the request terminal 310 is provided at a location other than the store. In such a case, the staff needs to input a store ID of the store to which the articles are to be delivered into the request terminal 310, and the request terminal 310 needs to generate a piece of delivery request information using the inputted store ID, as shown in FIG. 5 and transmit the piece of delivery request information to the distribution management apparatus 200.
   Further, it is acceptable to have an arrangement wherein there is no request terminal 310 to be connected to the distribution management apparatus 200 via a network, and instead the distribution management apparatus 200 is structured so that a recording medium on which the piece of delivery request information is recorded is connectable to the delivery request information storing unit 214 of the distribution management apparatus 200 and so that the allocation decision unit 250 refers to the piece of delivery request information recorded on the recording medium.
(3) In the embodiment described above, the distribution management apparatus 200, the request terminals, and the stock management terminals are connected with one another via a network. The connection of the network may be wired or wireless. The apparatus and the terminals do not always have to be connected. It is acceptable that they are connected with one another when communication is necessary.
(4) In the embodiment described above, the delivery time limit in a piece of delivery request information is expressed as a date; however, it is acceptable to modify the embodiment so as to express the delivery time limit as the number of days.
   Further, it is acceptable that the delivery time limit is flag information that indicates one of an immediate delivery and a non-immediate delivery. In such a case, the immediate deliverycriteria information is unnecessary, but it is necessary to modify the embodiment so that the allocation decision unit 250 performs the judgment in Step S22 of whether a deliver request is an immediate delivery request or not, merely based on the flag information in a piece of delivery request information. Further, in such a case, if a delivery request is judged to be an immediate delivery request, since the delivery time limit is not specifically indicated, it is acceptable to modify the process performed in Step S23 so that, as long as a satellite distribution center has as many articles in stock as indicated in the immediate delivery request, the satellite distribution center is selected as the allocation point. Alternatively, it is acceptable to modify the process performed in Step S23 so that, as long as the schedule is fixed for a day on which as many articles as indicated in the immediate delivery request are carried into the storage of a satellite distribution center, the satellite distribution center is selected as the allocation point.
   As additional information, in the case where the staff who makes a delivery request on a request terminal does not input information related to a delivery time limit, it is acceptable to set the delivery time limit as a date of the following day or the like. Alternatively, when flag information is used, it is acceptable to set the flag information into a value that indicates an immediate delivery.
(5) The distribution management apparatus described in the embodiment above transmits, when a distribution point has been selected as an allocation point for a delivery request, information indicating the distribution point, i.e. delivery information, to the stock management terminal provided at the distribution point; however, it is acceptable to output the information indicating the distribution point selected as the allocation point in the form of a print-out, sound, or the like, from the distribution management apparatus. Further, a stock management terminal may output the delivery information in any form.
(6) The immediate delivery criteria information described in the embodiment above may be structured so that the staff is able to update the information whenever necessary. For example, when some articles of which the sales are expected to go down, it is acceptable to have an arrangement wherein the quantity of articles to be carried into a satellite center is reduced gradually, and the immediate delivery criteria information is updated so that the immediate delivery criterion period is shorter. With this arrangement, when a delivery request is made for the articles of which the sales has become low, the delivery request will not be judged to be an immediate delivery request unless the delivery time limit is extremely short. Thus, by making the ratio of selecting a core distribution center as an allocation point higher, it is possible to reduce the quantity of articles kept in stock at a satellite distribution center.
(7) In the embodiment described above, the example is illustrated in which the immediate delivery criterion period to be used for the judgment of whether a delivery request is an immediate delivery request or not is determined for each kind of articles; however, it is acceptable to determine the immediate delivery criterion period as, for example, three days for all kinds of articles. Further, in the case where the distribution management apparatus transmits, in response to a delivery request, information indicating that acceptance of the delivery request is impossible, it is acceptable to modify the distribution management apparatus 200 so that the distribution management apparatus 200 calculates what delivery time limit would be sufficient for the delivery request to be accepted, by referring to each piece of site-specific stock management information, and transmits the information showing the calculation results as being attached, as well.
(8) In the embodiment described above, the allocation decision unit 250 judges, in the process performed in Step S23, S28, or S30, whether a specific distribution point has as many articles as indicated in the delivery request in stock that can be transported, within the delivery time limit, to the store which has made the delivery request. When the distribution point has the articles in stock, those articles are allocated for the delivery request. In the case where the distribution point has only a part of the quantity indicated in the delivery request, it is acceptable to allocate the articles in stock at the distribution point to partially cover the delivery request, and at the same time to allocate the articles in stock, if any, at another distribution point being located farther away from the destination to cover the rest of the delivery request. Alternatively, it is acceptable not to allocate articles at a specific distribution point for a delivery request, unless the specific distribution point by itself has a sufficient quantity of articles to meet the delivery request, and if another distribution point located farther away from the destination than the specific distribution point has the articles in stock, those articles in stock at such a distribution point are allocated.
(9) In the embodiment described above, the allocation decision unit 250 judges, in the process performed in Step S23, S28, or S30, whether or not there are currently articles in stock that can meet the delivery request and whether or not there will be articles in stock prospectively that become available within the period before the delivery time limit and can be delivered before the time limit; however, it is acceptable that the allocation decision unit 250 judges whether or not there are articles in stock that can meet the delivery request, only based on the articles currently in stock, and selects, if a distribution point being a target of judgment currently has sufficient quantity of articles in stock that can meet the delivery request, such a distribution point as the allocation point.
(10) It is acceptable to distribute a computer program for having a computer execute the steps of the processing (See FIGs. 13, and 15) performed by the distribution management apparatus, the request terminals, and the stock management terminals, by recording the program onto a recording medium or via various kinds of communication channels. The recording medium may be an IC card, an optical disc, a flexible disc, ROM, or the like. The computer program having been distributed serves for use as it is stored in a memory or the like from which the data can be read by a computer. The computer executes the program and realizes the functions of the distribution management apparatus, the request terminals, and the stock management terminals described in the embodiment above.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A distribution management apparatus that manages distribution of items to be routed through a plurality of distribution points in a predetermined order so as to be transported to destinations and determines, for each of delivery requests to have the items delivered to the destinations, from which one of the distribution points items in stock should be allocated, the distribution management apparatus comprising:
a stock information storing unit that stores therein stock information indicating, for each of the distribution points, a quantity of items that are currently and prospectively located at the distribution point and are allocatable for delivery requests;
a receiving unit operable to receive a delivery request for having specified items delivered to a destination, the delivery request including delivery schedule information related to a delivery time limit;
a judging unit operable to judge whether or not the delivery schedule information indicates an immediate delivery; and
a selecting unit operable to (i) in a case where the delivery schedule information indicates an immediate delivery, check the stock information of a first distribution point which is a last distribution point en route to the destination, judge whether or not the requested items are allocatable from the first distribution point, and select, when having judged in the affirmative, the first distribution point as an allocation point from which the items in stock are allocated to meet the delivery request, and (ii) in a case where the delivery schedule information does not indicate an immediate delivery, check the stock information of a second distribution point which is other than the first distribution point and is en route to the destination, judge whether or not the requested items are allocatable from the second distribution point, and select, when having judged in the affirmative, the second distribution point as the allocation point from which the items in stock are allocated to meet the delivery request.

2. The distribution management apparatus of Claim 1, further comprising
an outputting unit operable to output information specifying the allocation point, to outside of the distribution management apparatus.

3. The distribution management apparatus of Claim 2, further comprising
a stock information updating unit operable to, (i) when the first distribution point has been selected as the allocation point, update the stock information of the first distribution point by reducing the quantity of the items indicated as being allocatable from the first distribution point, and (ii) when the second distribution point has been selected as the allocation point, update the stock information of the second distribution point by reducing the quantity of the items indicated as being allocatable from the second distribution point.

4. The distribution management apparatus of Claim 3, comprising
a route information storing unit that stores therein route information indicating the predetermined order in which the items are to be routed through the plurality of distribution points, wherein
the selecting unit refers to the route information in order to specify the first distribution point of which the checking of the stock information is performed.

5. The distribution management apparatus of Claim 4, wherein
the selecting unit refers to the route information and specifies a second-last distribution point en route to the destination as the second distribution point of which the checking of the stock information is performed.

6. The distribution management apparatus of Claim 5, wherein
the selecting unit is further operable to, in the case where the delivery schedule information indicates an immediate delivery and the requested items are judged to be unallocatable from the first distribution point, check the stock information of each distribution point one by one, farther and farther away from the destination than the first distribution point is according to the route information, in order to judge whether or not the requested items are allocatable to meet the delivery request, until a distribution point from which the requested items are allocatable is found or there is no more distribution point to check for the stock information thereof and select, when such a distribution is found, the distribution point from which the requested items are allocatable as the allocation point, and
in the case where the delivery schedule information does not indicate an immediate delivery and the requested items are judged to be unallocatable from the second distribution point, check the stock information of each distribution point one by one, farther and farther away from the destination than the second distribution point is according to the route information, in order to judge whether or not the requested items are allocatable to meet the delivery request, until a distribution point from which the requested items are allocatable is found or there is no more distribution point to check for the stock information thereof and select, when such a distribution point is found, the distribution point from which the requested items are allocatable as the allocation point.

7. The distribution management apparatus of Claim 3, wherein
the delivery schedule information indicates how much time is left before the delivery time limit, and
the judging unit makes the judgment of whether a delivery is an immediate delivery or not by comparing the time left indicated in the delivery schedule information with a predetermined length of time.

8. The distribution management apparatus of Claim 3, wherein
the delivery schedule information is a flag indicating one of an immediate delivery and a non-immediate delivery, and
the judging unit makes the judgment of whether a delivery is an immediate delivery or not according to the flag.

9. The distribution management apparatus of Claim 3, wherein
the delivery request includes requested quantity information indicating a quantity of the items requested to be delivered, and
when the selecting unit makes the judgment of whether or not the requested items are allocatable from any of the distribution points, if one of the distribution points has allocatable items equal to or larger than the quantity of the items indicated in the requested quantity information, the selecting unit judges in the affirmative and selects the distribution point as the allocation point, and
the stock information updating unit updates the stock information of the allocation point by reducing the quantity of the items indicated as being allocatable from the allocation point by the quantity indicated in the requested quantity information.

10. The distribution management apparatus of Claim 9, wherein
the stock information includes, for each of the distribution points, (i) current stock information that indicates a quantity of the items currently in stock at the distribution point, (ii) arrival prospect information that indicates a quantity of the items expected to arrive on a current date and each of a predetermined number of following dates, and (iii) allocated item information that indicates a quantity of the items that are allocated for deliveries on the current date and each of a predetermined number of following dates,
the selecting unit refers to the current stock information, the arrival prospect information, and the allocated item information and when a distribution point has, on any of the current and the following dates, allocatable items equal to or larger than the quantity indicated in the requested quantity information, the allocatable items being calculated by subtracting the quantity of the items indicated in the allocated item information from a total quantity of the items located at the distribution point on each day, the selecting unit judges that the requested items are allocatable from the distribution point and selects the distribution point as the allocation point,
the selecting unit further selects one of the current and the following dates on which the allocation point has sufficient allocatable items as an allocation date, and
the stock information updating unit updates the stock information of the allocation point by increasing the quantity of the items having been allocated for the selected allocation date, which is indicated in the allocated item information, by the quantity of the items indicated in the requested quantity information.

11. The distribution management apparatus of Claim 3, wherein
the delivery request includes an item identifier for identifying the items to be delivered out of various kinds of items,
the stock information indicates the quantity of the items in correspondence with the item identifier, and
when the stock information indicates that a distribution point has allocatable items identified with the item identifier indicated in the delivery request, the selecting unit judges that the requested items are allocatable from the distribution point.

12. The distribution management apparatus of Claim 11, comprising
an immediate delivery criteria information storing unit that stores therein immediate delivery criterion information in which, for each of the various kinds of items, an item identifier is shown in correspondence with an immediate delivery criterion period with which judgment of whether a delivery is an immediate delivery or not is made, wherein
the delivery schedule information indicates how much time is left before the delivery time limit, and
the judging unit makes the judgment of whether a delivery is an immediate delivery or not by comparing the immediate delivery criterion period corresponding to the item identifier indicated in the delivery request with the time left indicated in the delivery schedule information.

13. A distribution management system including (i) a distribution management apparatus that manages distribution of items to be routed through a plurality of distribution points in a predetermined order so as to be transported to destinations and determines, for each of delivery requests to have the items delivered to the destinations, from which one of the distribution points items in stock should be allocated and (ii) an output terminal, wherein
the distribution management apparatus comprises:
a stock information storing unit that stores therein stock information indicating, for each of the distribution points, a quantity of items that are currently and prospectively located at the distribution point and are allocatable for delivery requests;
a receiving unit operable to receive a delivery request for having specified items delivered to a destination, the delivery request including delivery schedule information related to a delivery time limit;
a judging unit operable to judge whether or not the delivery schedule information indicates an immediate delivery;
a selecting unit operable to (i) in a case where the delivery schedule information indicates an immediate delivery, check the stock information of a first distribution point which is a last distribution point en route to the destination, judge whether or not the requested items are allocatable from the first distribution point, and select, when having judged in the affirmative, the first distribution point as an allocation point from which the items in stock are allocated to meet the delivery request, and (ii) in a case where the delivery schedule information does not indicate an immediate delivery, check the stock information of a second distribution point which is other than the first distribution point and is en route to the destination, judge whether or not the requested items are allocatable from the second distribution point, and select, when having judged in the affirmative, the second distribution point as the allocation point from which the items in stock are allocated to meet the delivery request; and
a transmitting unit operable to transmit allocation point information indicating the allocation point to the output terminal, and
the output terminal comprises:
an acquiring unit operable to acquire the allocation point information; and
a displaying unit operable to display the acquired allocation point information.

14. The distribution management system of Claim 13, wherein
the output terminal is located at one of the distribution points.

15. The distribution management system of Claim 13, wherein each of the output terminals further comprises
a printing unit operable to print the allocation point information acquired by the acquiring unit.

16. The distribution management system of Claim 13, further comprising
a request terminal operable to generate, based on an input operation, request information that indicates the delivery request and transmit the request information to the distribution management apparatus, wherein
the receiving unit receives the delivery request by receiving the request information.

17. A distribution management method for managing distribution of items to be routed through a plurality of distribution points in a predetermined order so as to be transported to destinations and determining, for each of delivery request to have the items delivered to the destinations, from which one of the distribution points items in stock should be allocated, the distribution management method comprising:
a stock information storing step of storing, into a recording medium, stock information indicating, for each of the distribution points, a quantity of items that are currently and prospectively located at the distribution point and are allocatable for delivery requests;
a receiving step of receiving a delivery request for having specified items delivered to a destination, the delivery request including delivery schedule information related to a delivery time limit;
a judging step of judging whether or not the delivery schedule information indicates an immediate delivery; and
a selecting step of (i) in a case where the delivery schedule information indicates an immediate delivery, checking the stock information of a first distribution point which is a last distribution point en route to the destination, judging whether or not the requested items are allocatable from the first distribution point, and selecting, when having judged in the affirmative, the first distribution point as an allocation point from which the items in stock are allocated to meet the delivery request, and (ii) in a case where the delivery schedule information does not indicate an immediate delivery, checking the stock information of a second distribution point which is other than the first distribution point and is en route to the destination, judging whether or not the requested items are allocatable from the second distribution point, and selecting, when having judged in the affirmative, the second distribution point as the allocation point from which the items in stock are allocated to meet the delivery request.

18. The distribution management method of Claim 17, further comprising:
a loading step of loading the items that are indicated in the delivery request and allocated from the selected allocation point onto a transportation means; and
a transporting step of transporting the loaded items to the destination following a transportation route in the predetermined order as well as performing transshipment of items at every distribution point en route to the destination.

19. Acontrol program to have a computerperforma distribution management processing for managing distribution of items to be routed through a plurality of distribution points in a predetermined order so as to be transported to destinations and determining, for each of delivery requests to have the items delivered to the destinations, from which one of the distribution points items in stock should be allocated, wherein
the computer is able to access a recording medium on which stock information is recorded, the stock information indicating, for each of the distribution points, a quantity of items that are currently and prospectively located at the distribution point and are allocatable for delivery requests, and
the distribution management processing comprises:
a stock information storing step of storing the stock information into the recording medium;
a receiving step of receiving a delivery request for having specified items delivered to a destination, the delivery request including delivery schedule information related to a delivery time limit;
a judging step of judging whether or not the delivery schedule information indicates an immediate delivery; and
a selecting step of (i) in a case where the delivery schedule information indicates an immediate delivery, checking the stock information of a first distribution point which is a last distribution point en route to the destination, judging whether or not the requested items are allocatable from the first distribution point, and selecting, when having judged in the affirmative, the first distribution point as an allocation point from which the items in stock are allocated to meet the delivery request, and (ii) in a case where the delivery schedule information does not indicate an immediate delivery, checking the stock information of a second distribution point which is other than the first distribution point and is en route to the destination, judging whether or not the requested items are allocatable from the second distribution point, and selecting, when having judged in the affirmative, the second distribution point as the allocation point from which the items in stock are allocated to meet the delivery request.
